# EUROPEAN PATENT SPECIFICATION

(11) **EP 2 152 504 B1**
(45) Date of publication and mention of the grant of the patent: **08.07.2015**
(21) Application number: 08758386.0
(22) Date of filing: 05.05.2008
(51) Int. Cl.: B29D 11/00

(54) **METHOD FOR MANUFACTURING AN OPTICAL ELEMENT MADE OF THERMOSETTING PLASTIC MATERIAL FOR USE IN EYE-PROTECTING DEVICES AND OPTICAL ELEMENT THUS OBTAINED**
VERFAHREN ZUR HERSTELLUNG EINES OPTISCHEN ELEMENTS AUS EINEM WÄRMEHÄRTENDEN KUNSTSTOFFMATERIAL ZUR VERWENDUNG FÜR AUGENSCHUTZVORRICHTUNGEN UND AUF DIESE WEISE HERGESTELLTES OPTISCHES ELEMENT
PROCÉDÉ DE FABRICATION D'UN ÉLÉMENT OPTIQUE FAIT D'UNE MATIÈRE PLASTIQUE THERMODURCISSABLE POUR UTILISATION DANS DES DISPOSITIFS DE PROTECTION DES YEUX, ET ÉLÉMENT OPTIQUE AINSI OBTENU

(30) Priority: 04.05.2007 IT MI20070902; 23.07.2007 US 961730 P; 28.08.2007 IT MI20071699; 02.10.2007 US 977054 P
(43) Date of publication of application: 17.02.2010
(73) Proprietor: Intercast Europe S.r.l., 43121 Parma (IT)
(72) Inventor: MENTA, Federico, I-43100 Parma (IT); LAGASI, Matteo, I-43100 Parma (IT); MARUSI, Graziano, I-43100 Parma (IT)
(74) Representative: Bottero, Claudio
(86) International application number: PCT/EP2008/003597
(87) International publication number: WO 2008/135268

(56) References cited:
- WO-A-95/15845
- WO-A-96/18921
- DE-A1-102005 022 860
- US-A1- 2004 017 610
- US-B1- 6 220 703

## Description

### Background of the invention

In a general aspect thereof, the present invention relates to the manufacture of an optical element made of a thermosetting plastic material for use in eye-protecting devices and/or in devices adapted for correcting vision, such as eyeglasses, masks, visors and the like.

More particularly, the invention relates to a method for manufacturing a polarising or non-polarising optical element comprising at least one functionalised layer incorporating at least one chemical compound adapted to modify the spectral characteristics of transmitted light as well as to a polarising or non-polarising optical element thus obtained.

The invention also relates to any eye-protecting device comprising the aforementioned polarising or non-polarising optical element.

The optical element of the invention can be a semi-finished product in terms of shape and/or refractive properties, from which it is possible to obtain, by shaping and possibly bevelling, an ocular for eye-protecting devices, such as for example an ophthalmic lens, i.e. having specific refractive properties adapted to correct vision, or a non-ophthalmic lens for eyeglasses.

Alternatively, the optical element of the invention can also be a finished product in terms of shape and/or refractive properties, such as for example an ocular in the form of a lens for ophthalmic or non-ophthalmic eyeglasses, visors, protective masks or portable screens.

In the following description and in the appended claims, the terms: eye-protecting device, and: ocular, are used to indicate elements suitable respectively to protect the eyes and to allow vision, as defined by European Standard CEN EN 165.

In addition, in the following description and in the appended claims, the terms: device adapted to correct vision, lenses, lenses for eyeglasses, ophthalmic lenses, are used to indicate corresponding elements as defined by ISO Standard 13666.

### Related art

As is known, in the field of manufacturing optical elements made of plastic material for use in eye-protecting devices, the need is felt of conferring to the optical element suitable light filtering properties, or more generally, properties capable of modifying the spectral characteristics of the light transmitted by the element itself in such a way as to protect the eye and allow an improved optimal vision both in poorly lit environments and in full light conditions. In this latter case, it may also be desirable to reduce the effects of glare by conferring to the optical element polarising properties.

In this context, the optical elements made of plastic material are required to have optical properties as close as possible to those of glass (notoriously optimal), a material that is usually penalised today on the market of eye-protecting devices and/or of devices adapted to correct vision due to its weight and poor impact resistance which becomes satisfactory only with significant thicknesses (and thus weight).

In the manufacture of optical elements for use in eye-protecting devices and/or in devices adapted to correct vision, the use is known of thermoplastic materials, such as for example polycarbonate which has considerable lightness and impact resistance characteristics, which are shaped by means of injection moulding to form the optical element at temperatures usually comprised between 190°C and 230°C.

According to a first manufacturing technique, the optical element formed by injection moulding is subsequently treated so as to impart thereto suitable properties capable of modifying the spectral characteristics of the transmitted light, for example by introducing into the mass of plastic material (or into a surface layer thereof) one or more dyeing compounds or one or more compounds provided with photochromatic characteristics.

According to a second manufacturing technique, described for example in US patent n. 7,077,985, the desired properties capable of modifying the spectral characteristics of the transmitted light are conferred to the optical element during the injection moulding step by inserting in a mould a functionalised layer adapted to modify the spectral characteristics of the transmitted light, for example a laminate having photochromatic characteristics.

More particularly, this patent discloses a method for manufacturing ophthalmic lenses comprising the steps of providing a photochromatic laminate functional film, preforming such laminate so as to impart thereto a shape thinner than that of the laminate housing cavity defined in an injection mould, injecting a molten thermoplastic material into the mould, maintaining the mould at a temperature of 132-143°C (270-290°F) during injection of the thermoplastic material, cooling the thermoplastic material after moulding and removing the resulting ophthalmic lens from the mould.

The optical elements provided with at least one functionalised layer adapted to modify the spectral characteristics of the transmitted light manufactured by employing thermoplastic materials by means of injection moulding, however, possess non-optimal optical characteristics due to both the pre-selected material (for example, the polycarbonate has a rather low Abbe number), and to the injection moulding technique itself which imparts to the material during the forming operations deformations which turn out in undesired birefringence phenomena of the finished optical element.

The introduction in the optical element of a functionalised layer in the form of a laminate functional film, moreover, introduces further elements which can jeopardise the optical properties of the optical element and related to the possibility that defects may form at the interface between the laminate film and the mass of thermoplastic material, or to ageing phenomena with a partial separation of the laminate film from such a mass.

In the manufacture of optical elements for use in eye-protecting devices, the use is also known of thermosetting plastic materials, such as for example bis-allyl carbonates or polyurethanes which possess definitely superior optical characteristics with respect to those of the thermoplastic materials and also, in the case of polyurethanes, an impact resistance comparable to that of polycarbonate.

In this case, the manufacture of the optical elements made of thermosetting plastic material having suitable properties adapted to modify the spectral characteristics of the light transmitted by the element itself generally envisages the introduction of suitable dyeing substances, or substances having photochromatic properties, within the entire mass of the thermosetting plastic material.

This technique, while being substantially suitable for the purpose, has however the drawback of having a relatively high cost, in particular in the case of photochromatic compounds, due to the high cost of such compounds which are employed for the mass treatment of the plastic material.

Alternatively, optical elements made of thermosetting plastic material having suitable properties capable of modifying the spectral characteristics of the transmitted light can be manufactured by inserting a polarising laminate film within the mass of plastic material as described, for example, in US patents n. 6,650,473 and 7,002,744.

More particularly, US patent n. 6,650,473 discloses a method for manufacturing polarising lenses comprising the steps of bonding a plastic film to a polarising sheet by means of an adhesive so as to form a laminate, hot-pressing such laminate so as to obtain a shape similar to that of a lens, placing the hot-pressed laminate in a cavity defined in an injection mould and injecting a resin forming the lens capable of melting with the plastic film in the mould cavity.

This manufacturing method, while employing thermosetting plastic materials, involves however an injection of plastic material in a molten state into the mould, and as such, has the same drawbacks illustrated above with reference to the injection moulding techniques of the thermoplastic materials.

Also in this case, moreover, the insertion in the optical element of a layer in the form of a laminate polarising film can be affected by the drawbacks related to the possibility that defects may form at the interface between the laminate film and the thermosetting material mass, or to ageing phenomena with a partial separation of the laminate film from the mass itself.

US patent n. 7,002,744, on the other hand, discloses different manufacturing methods of polarising lenses using cast thermosetting resins. Among these, the preferred method provides for the complete incorporation of the polarising film within the resin. This method offers the advantage of obtaining an improved optical quality particularly when the optical element is obtained by casting of a thermosetting resin and not by injection moulding of a thermoplastic polymer.

Polarising films suitable for the purpose include a variety of different structures and materials. These structures include unsupported or non-laminated polarising films such as polarising films made of PVA or PET, and polarising films supported by means of permanent and non-removable lamination of transparent plastic materials that predominantly have support functions such as, for example, polycarbonate, cellulose triacetate, cellulose diacetate and cellulose acetobutyrate.

The manufacturing methods disclosed in this reference, however, are affected by a number of drawbacks.

For example, in the manufacture of polarising blanks for obtaining ophthalmic lenses by means of optical processing and polishing of the concave surface it is desired that the polarising film be positioned as close as possible to the convex surface. This allows to obtain, after the aforesaid optical processing, ophthalmic lenses with corrective use having a lower minimum processing thickness, a desired quality due to the greater lightness and improved appearance of the finished product.

It ensues that a polarising blank for obtaining ophthalmic lenses in which the polarising film is completely incorporated within the resin desirably has a strong asymmetric structure, in which the thermosetting resin layer between the polarising film and the convex outer surface of the blank has a significantly lower thickness than the thermosetting resin layer between the polarising film and the concave inner surface of the blank.

Such a desired asymmetry of the polarising blank, however, generates a strong manufacturing problem since it may be difficult to completely fill in a proper manner the two strongly asymmetric hollow portions defined within the mould cavity by the polarising film to obtain an optical element of adequate quality avoiding at the same time a displacement of the polarising film from the desired position. This problem, furthermore, may further worsen together with the increase of viscosity and/or casting flow rate of the thermosetting resin inside the mould.

In addition, when thermosetting resins with exothermic polymerisation reaction are used, the size and functional quality of the polarising film can be altered by the relatively high temperatures, up to 150-160°C, which can be reached at the exothermic peak during the first polymerisation step of the polymer mass.

International Patent Application WO 95/15845 relates to methods for making optical quality plastics lenses with photochromic additives.

International Patent Application WO 96/18921 relates to a process for preparing a cross-linked polymeric article, which process includes: providing a cross-linkable polymeric casting composition; and a photochromic composition; subjecting the cross-linkable polymeric casting composition to partial cure, such that the polymer reaches or exceeds its point of gelation; and contacting the partially cured gelled polymer with the photochromic composition.

US Patent application n. 2004/0017610 relates to optical-quality polarized parts and methods for manufacturing the optical parts. The polarized optical part has improved impact resistance over conventional thermoset resin parts, as well as better optical properties than similar impact-resistant polycarbonate constructs.

### Summary of the invention

The present invention aims at providing a method which allows to manufacture at the lowest possible cost an optical element made of thermosetting plastic material for use in eye-protecting devices having at least one functionalised layer incorporating at least one chemical compound adapted to modify the spectral characteristics of the transmitted light and which is devoid at least in part of the drawbacks mentioned above with reference to the cited prior art.

According to a first aspect thereof, the present invention therefore provides a method for manufacturing an optical element made of thermosetting plastic material and comprising at least one functionalised layer incorporating at least one chemical compound adapted to modify the spectral characteristics of transmitted light, comprising the steps of:
a) providing in a mould a first self-supporting layer made of partially cross-linked thermosetting plastic material including a partially cross-linked polyurethane or polyol-allyl-carbonate polymer comprising reactive functional groups selected from -NCO or - CH=CH₂;
b) forming on at least one surface of said self-supporting layer a second layer including:
   i) a polymerisable material in liquid phase including:
      - a first polyisocyanate or polyol-allyl-carbonate prepolymer and/or a first isocyanate or allyl-carbonate monomer including reactive functional groups capable of chemically reacting with the reactive functional groups of the self-supporting layer made of partially cross-linked thermosetting plastic material, and
      - a reactive component including functional groups capable of chemically reacting with the reactive functional groups of the first prepolymer and/or of the first monomer,
      wherein said functional groups of the first prepolymer and/or the first monomer are selected from -NCO or -CH=CH₂,
      wherein said first polyisocyanate prepolymer has a content of -NCO isocyanate reactive functional groups comprised between 5 and 50% by weight, an average functionality comprised between 2 and 3, a viscosity lower than 5,000 mPa.s at 70°C,
      wherein said first polyol-allyl-carbonate prepolymer has an average functionality comprised between 1 and 2, a viscosity of 5-60 mPa.s at 25°C,
   ii) at least one chemical compound adapted to modify the spectral characteristics of the transmitted light,
c) cross-linking said first and second layers in the mould so as to form a solid monolithic optical element made of thermosetting plastic material comprising at least one functionalised layer incorporating said at least one chemical compound adapted to modify the spectral characteristics of the transmitted light.

Within the framework of the present description and of the subsequent claims, the clause: self-supporting layer made of thermosetting plastic material, is used to indicate a solid layer made of plastic material having mechanical characteristics which allow to handle the layer without substantial losses or alterations of its shape and consistency.

Within the framework of the present description, the clause: element adapted to modify the spectral characteristics of the transmitted light, is used to indicate any product or compound capable to modify in a desired manner the spectral characteristics of the transmitted light, for example by filtering the transmitted light in selected portions of the visible light spectrum or by polarising the transmitted light so as to reduce glare. Examples of elements adapted to modify the spectral characteristics of the transmitted light for the purposes of the invention are at least one chemical compound having light filtering characteristics, at least one photochromatic compound or a polarising layer comprising, for example, a polarising film or a polarising coating.

Within the framework of the present description, the aforementioned at least one element adapted to modify the spectral characteristics of the transmitted light could either be a substance (such as a chemical compound having light filtering characteristics or a photochromatic compound) incorporated in the polymerisable material in liquid phase or a polarising layer (for example comprising, as mentioned above, a polarising film or a polarising coating) which is included in the second layer and surrounded or in contact with the polymerisable material in liquid phase.

Accordingly, within the framework of the present description, the clause: functionalised layer adapted to modify the spectral characteristics of the transmitted light, is used to indicate a solid layer made of plastic material incorporating at least one element adapted to modify the spectral characteristics of the transmitted light as defined above, for example at least one chemical compound having light filtering characteristics and/or at least one photochromatic compound and/or a polarising layer.

Within the framework of the present description and of the subsequent claims, moreover, the terms: cross-linking, and: polymerisation, will be used interchangeably to indicate the formation of chemical bonds between two or more reactive compounds adapted to increase the molecular weight of the product thus obtained.

Advantageously, the method of the invention allows to manufacture an optical element capable of modifying the spectral characteristics of the transmitted light and having optimal optical characteristics deriving from the obtainment of a solid, substantially uniform monolithic structure following the formation of chemical bonds between the first self-supporting layer made of partially cross-linked thermosetting plastic material and the second layer including at least one element adapted to modify the spectral characteristics of the transmitted light.

Thanks to these features and as it will become better apparent in the following description, it is in particular possible to manufacture, at a relatively limited cost, an ophthalmic lens for eyeglasses made of thermosetting plastic material having both optimal optical properties and modification properties of the spectral characteristics of the transmitted light.

In a preferred embodiment and by imparting a suitable thickness to the first self-supporting layer made of thermosetting plastic material and a more reduced thickness to the second layer adapted to modify the spectral characteristics of the transmitted light, furthermore, it is in particular possible to obtain a semi-finished product or blank from which an ophthalmic lens may be obtained by means of mechanical processing of the thicker, optically transparent part (the first layer) without however damaging the functionalised layer adapted to modify the spectral characteristics of the transmitted light and, therefore, obtaining an optical element having the desired properties of vision correction.

If the element adapted to modify the spectral characteristics of the transmitted light is a polarising layer, the mechanical processing of the thicker, optically transparent part (the first layer), may in particular be carried out without damaging the polarising layer which may be either associated to a surface of the optically transparent part (the first layer) or incorporated within the second layer and, therefore, obtaining a polarising optical element having the desired properties of glare reduction and vision correction.

In the following description and in the appended claims, the term: optically transparent, is used to indicate the property of one layer or part of the optical element of not altering, in a substantial manner, the spectrum of the visible light transmitted through the same.

In a further embodiment of the method of the invention, it is also possible to manufacture an optical element made of thermosetting plastic material and comprising at least one functionalised layer incorporating at least one chemical compound adapted to modify the spectral characteristics of the transmitted light, by means of the steps of:
d) providing in a mould a first self-supporting layer made of partially cross-linked thermosetting plastic material including a partially cross-linked polyurethane or polyol-allyl-carbonate polymer comprising reactive functional groups selected from -NCO or - CH=CH₂ and at least one chemical compound adapted to modify the spectral characteristics of the transmitted light of the self-supporting layer;
e) forming on at least one surface of said self-supporting layer a second layer including:
   i) a polymerisable material in liquid phase including:
      - a first polyisocyanate or polyol-allyl-carbonate prepolymer and/or a first isocyanate or allyl-carbonate monomer including reactive functional groups capable of chemically reacting with the reactive functional groups of the self-supporting layer made of partially cross-linked thermosetting plastic material,
      - a reactive component including functional groups capable of chemically reacting with the reactive functional groups of the first prepolymer and/or of the first monomer,
      wherein said functional groups of the first prepolymer and/or the first monomer are selected from -NCO or -CH=CH₂,
      wherein said first polyisocyanate prepolymer has a content of -NCO isocyanate reactive functional groups comprised between 5 and 50% by weight, an average functionality comprised between 2 and 3, a viscosity lower than 5,000 mPa.s at 70°C,
      wherein said first polyol-allyl-carbonate prepolymer has an average functionality comprised between 1 and 2, a viscosity of 5-60 mPa.s at 25°C,
f) cross-linking said first and second layers in the mould so as to form a solid monolithic optical element made of thermosetting plastic material comprising at least one functionalised layer incorporating said at least one chemical compound adapted to modify the spectral characteristics of the transmitted light.

In this manner, it is advantageously possible to manufacture, in a first step, a functionalised self-supporting layer made of thermosetting plastic material including at least one chemical compund adapted to modify the spectral characteristics of the transmitted light, which layer can be subsequently chemically bonded during the cross-linking step with a layer which may be either optically transparent or functionalised in order to modify the spectral characteristics of the transmitted light, and preferably adapted to form the supporting body of the optical element.

Within the framework and for the purposes of this second embodiment of the invention and as will be explained in greater detail below, the chemical compund adapted to modify the spectral characteristics of the transmitted light may be either incorporated within part or the whole the mass of the layers made of thermosetting plastic material, for example the self-supporting layer, or associated to at least one surface of one of the two layers.

Also this additional embodiment of the method of the invention allows to achieve the advantageous technical effects mentioned above with respect to the first embodiment, the difference between the two embodiments essentially lying in the way in which the at least one functionalised layer adapted to modify the spectral characteristics of the transmitted light is realised.

In both of the aforementioned embodiments of the method of the invention, it is advantageously possible to manufacture a relatively thin functionalised layer adapted to modify the spectral characteristics of the transmitted light with a cost reduction related to a lower consumption of the chemical compounds capable to attain this technical effect.

Also disclosed herein is a method wherein the aforementioned at least one element adapted to modify the spectral characteristics of the transmitted light is a polarising layer. In this method, it is advantageously possible to reduce the mass of thermosetting resin in the reaction step and/or to increase the ratio between the heat exchange surface and the polymer mass in the reaction step thereby reducing the temperatures reached at the exothermic peak and achieving the additional advantage that the physical and optical properties of the polarising layer are not significantly altered even by using thermosetting resins with strongly exothermic polymerisation reaction.

In both of the aforementioned embodiments of the method of the invention and as will be described in greater detail hereinbelow, it is also possible to manufacture an optical element having differentiated properties capable of modifying the spectral characteristics of the transmitted light in both the above-described first and second layers when the polymerisable material in liquid phase employed in step b) or step e) of the method further includes at least one polarising film adapted to modify the spectral characteristics of the transmitted light.

In a preferred embodiment of the invention, the aforementioned step a) of the method is carried out by means of the steps of:
a1) introducing into a mould cavity a layer of a polymerisable material in liquid phase including:
   - a first polyisocyanate or polyol-allyl-carbonate prepolymer and/or a first isocyanate or allyl-carbonate monomer including reactive functional groups,
   - a reactive component including functional groups capable of chemically reacting with the reactive functional groups of the first prepolymer and/or of the first monomer,
   wherein said functional groups of the first prepolymer and/or the first monomer are selected from -NCO or -CH=CH₂,
   wherein said first polyisocyanate prepolymer has a content of -NCO isocyanate reactive functional groups comprised between 5 and 50% by weight, an average functionality comprised between 2 and 3, a viscosity lower than 5,000 mPa.s at 70°C,
   wherein said first polyol-allyl-carbonate prepolymer has an average functionality comprised between 1 and 2, a viscosity of 5-60 mPa.s at 25°C,
a2) partially cross-linking the layer thus formed so as to obtain a self-supporting layer made of partially cross-linked thermosetting plastic material including reactive functional groups.

For the purposes of the invention, the first self-supporting layer made of partially cross-linked thermosetting plastic material may be provided, preferably by means of the aforementioned cast moulding techniques, within the same mould used to form the final solid monolithic optical element or, alternatively, may be provided within a separate mould. In this latter case, the aforementioned steps a) or d) of the method include the steps of forming the first self-supporting layer made of partially cross-linked thermosetting plastic material in a first mould and then of inserting the first self-supporting layer into a second mould so as to define a moulding cavity in which the second layer of is subsequently formed.

If the aforementioned at least one element adapted to modify the spectral characteristics of the transmitted light is a polarising film, the aforementioned mould comprises:
- the self-supporting layer obtained by means of step a),
- a mould wall optically worked and polished on at least one side and defining with the self-supporting layer at least one moulding cavity,
- a gasket laterally sealing said at least one moulding cavity and adapted to support a polarising film and maintain the same in a suspended condition, and
while the aforementioned step b) of forming the second layer on at least one surface of the self-supporting layer is carried out by means of the steps of:
b1) associating to said gasket a polarising film adapted for being supported and maintained in a suspended condition by the aforementioned gasket so as to define within said at least one moulding cavity a first hollow portion extending between the self-supporting layer and the polarising film and a second hollow portion extending between the polarising film and said optically worked and polished side of said mould wall;
b2) introducing into said first and second hollow portions of said at least one moulding cavity a polymerisable material in liquid phase according to step a1).

In this manner, it is advantageously possible to manufacture an optical element comprising a functionalised layer adapted to modify the spectral characteristics of transmitted light comprising a polarising film while substantially eliminating the above-mentioned problem of displacement of the polarising film which affects the manufacturing methods of the prior art.

This advantageous technical effect is essentially due to the more limited volume of the moulding cavity in which the polarising film is placed, which limited volume limits in turn the volume of the polymerisable material in liquid phase to be introduced into the moulding cavity to form the second layer of the optical element thereby substantially avoiding any filling problems of the moulding cavity.

Within the framework of this preferred embodiment, the polarising film is preferably supported and maintained in a suspended condition by the gasket along a surface of transversal symmetry of the moulding cavity so as to define within the moulding cavity two symmetrical hollow portions having substantially the same volume on either side of the polarising film.

In this way, the effectiveness of the filling operations may be further increased by supporting the polarising film along a surface of transversal symmetry of the moulding cavity, so that the introduction of the polymerisable material in liquid phase into the mould may be carried out by filling, preferably substantially simultaneously, the two symmetrical hollow portions having substantially the same volume defined in the moulding cavity acting on either side of the polarising film and avoiding any displacement of the polarising film from the desired position.

Within the framework of this preferred embodiment of the invention, the gasket laterally sealing the moulding cavity is preferably made of a suitable plastic material, such as polyethylene, while the aforementioned optically worked and polished mould wall is preferably made of a suitable structural material such as glass or metal.

According to an embodiment which is not part of the invention, the aforementioned at least one element adapted to modify the spectral characteristics of the transmitted light is a polarising layer and the method further comprises the step of associating the polarising layer to at least a surface of the first self-supporting layer made of thermosetting plastic material before carrying out said step b) of forming the second layer.

As mentioned above, the polarising layer may comprise a polarising film or a polarising coating, while the step of associating the polarising layer to at least a surface of the first self-supporting layer may be carried out according to techniques known in the art such as by simply laying the polarising layer on a surface of the first self-supporting layer or by grafting a suitably surface-treated polarising film to said surface or by forming on this surface a polarising layer according to procedures known in the art.

In this manner, it is advantageously possible to manufacture an optical element comprising a functionalised layer adapted to modify the spectral characteristics of transmitted light comprising a polarising layer while substantially reducing or eliminating the above-mentioned problems which affect the manufacturing methods of the prior art related to a possible displacement of the polarising layer and/or to possible alterations of the physical and optical properties of the polarising layer consequent to the development of high temperatures at the exothermic peak whenever thermosetting resins with strongly exothermic polymerisation reaction are used.

In a further preferred embodiment of the invention, the aforementioned step d) of the method is carried out by means of the steps of:
d1) introducing into a mould cavity a layer of a polymerisable material in liquid phase according to step a1),
d2) partially cross-linking the layer thus formed so as to obtain a self-supporting layer made of partially cross-linked thermosetting plastic material including reactive functional groups;
d3) introducing into at least one portion of the self-supporting layer made of partially cross-linked thermosetting plastic material thus obtained at least one chemical compound adapted to modify the spectral characteristics of the transmitted light.

In a further preferred embodiment of the invention, the aforementioned step d) is carried out by means of the steps of:
d4) introducing into a mould cavity a layer of a polymerisable material in liquid phase according to step a1) and including said at least one chemical compound adapted to modify the spectral characteristics of the transmitted light,
d5) partially cross-linking the layer thus formed so as to obtain a self-supporting layer made of partially cross-linked thermosetting plastic material including reactive functional groups and at least one chemical compound adapted to modify the spectral characteristics of the transmitted light in at least one portion thereof.

Both the aforementioned embodiments, advantageously allow to manufacture in an effective way an optical element in which the functionalised layer adapted to modify the spectral characteristics of transmitted light is the first self-supporting layer.

In a further preferred embodiment of the invention and in order to obtain a polarising optical element, the method further comprises a polarising film embedded within the first self-supporting layer made of partially cross-linked thermosetting plastic material.

Within the framework of this embodiment, the aforementioned step d) is then carried out by means of the steps of:
d1) providing a first mould comprising:
   - a first mould wall optically worked and polished on at least one side,
   - a second mould wall optically worked and polished on at least one side and defining with the first mould wall at least one moulding cavity,
   - a gasket laterally sealing said at least one moulding cavity and adapted to support a polarising film and maintain the same in a suspended condition,
d2) associating to said gasket a polarising film adapted for being supported and maintained in a suspended condition by the aforementioned gasket so as to define within said at least one moulding cavity a first hollow portion extending between the first mould wall and the polarising film and a second hollow portion extending between the polarising film and the second mould wall;
d3) introducing into said first and second hollow portions of said at least one moulding cavity a polymerisable material in liquid phase according to step a1),
d4) partially cross-linking the layer thus formed so as to obtain a self-supporting layer made of partially cross-linked thermosetting plastic material including reactive functional groups and a polarising film;
d5) introducing into at least one portion of the self-supporting layer made of partially cross-linked thermosetting plastic material thus obtained said at least one chemical compound adapted to modify the spectral characteristics of the transmitted light; and
d6) inserting the first self-supporting layer thus obtained into a second mould.

Within the framework of this preferred embodiment, the polarising film is preferably supported and maintained in a suspended condition by the gasket along a surface of transversal symmetry of the moulding cavity so as to define within the latter two symmetrical hollow portions having substantially the same volume on either side of the polarising film.

In this manner and similarly to what has been disclosed hereinabove with reference to the forming operations of the second layer, it is advantageously possible to manufacture an optical element comprising a self-supporting functionalised layer adapted to modify the spectral characteristics of transmitted light formed by a polarising film embedded within the first self-supporting layer while substantially eliminating the above-mentioned problem of displacement of the polarising film which affects the manufacturing methods of the prior art.

Also in this case, this advantageous technical effect may be maximised if the first moulding cavity of the first self-supporting layer has a more reduced volume with respect to the second moulding cavity of the second layer, since this limits in turn the volume of the polymerisable material in liquid phase to be introduced to form the first self-supporting layer of the optical element thereby substantially avoiding any filling problems of the first moulding cavity.

In addition and as mentioned above, the effectiveness of the filling operations may be further increased by supporting the polarising film along a surface of transversal symmetry of the first moulding cavity, so that the introduction of the polymerisable material in liquid phase into the mould may be carried out by filling, preferably substantially simultaneously, the two symmetrical hollow portions having substantially the same volume defined in the first moulding cavity acting on either side of the polarising film and avoiding any displacement of the polarising film from the desired position.

According to an embodiment which is not part of the invention and in order to obtain a polarising optical element, the aforementioned at least one element adapted to modify the spectral characteristics of the transmitted light may be a polarising film associated to at least one surface of the first self-supporting layer made of partially cross-linked thermosetting plastic material.

Within the framework of this embodiment, the aforementioned step d) is then carried out by means of the steps of:
d1) providing a first mould comprising:
   - a first mould wall optically worked and polished on at least one side,
   - a second mould wall optically worked and polished on at least one side and defining with the first mould wall at least one moulding cavity,
   - a gasket laterally sealing said at least one moulding cavity,
d2) associating a polarising film to one of said first or second mould walls or supporting a polarising film adjacent to one of said first or second mould walls by means of said gasket;
d3) introducing into said at least one moulding cavity of the first mould a polymerisable material in liquid phase including:
   - a first prepolymer and/or a first monomer including reactive functional groups,
   - a reactive component including functional groups capable of chemically reacting with the reactive functional groups of the first prepolymer and/or of the first monomer,
d4) partially cross-linking the layer thus formed so as to obtain a self-supporting layer made of partially cross-linked thermosetting plastic material including reactive functional groups and a polarising film associated to at least one surface thereof;
d5) optionally introducing into at least one portion of the self-supporting layer made of partially cross-linked thermosetting plastic material thus obtained at least one compound adapted to modify the spectral characteristics of the transmitted light; and
d6) inserting the first self-supporting layer thus obtained into a second mould.

In this manner, it is advantageously possible to manufacture an optical element comprising a functionalised layer adapted to modify the spectral characteristics of transmitted light formed by a polarising film associated to at least one surface of the first self-supporting layer, for example the top outer surface thereof, further reducing and substantially eliminating the risk that the polarising film may be displaced from its desired position.

In this embodiment, in fact, the polarising film is associated to one of the first or second mould walls or is supported adjacent thereto by means of said gasket thereby avoiding that the flow of polymerisable material in liquid phase introduced into the mould could displace in an undesired manner the polarising film.

In a further preferred embodiment of the invention and in order to obtain a polarising optical element, the method further comprises a polarising film embedded within the first self-supporting layer made of partially cross-linked thermosetting plastic material.

Within the framework of this embodiment, the aforementioned step d) is then carried out by means of the steps of:
d1) providing a first mould comprising:
   - a first mould wall optically worked and polished on at least one side,
   - a second mould wall optically worked and polished on at least one side and defining with the first mould wall at least one moulding cavity,
   - a gasket laterally sealing said at least one moulding cavity and adapted to support a polarising film and maintain the same in a suspended condition,
d2) associating to said gasket a polarising film adapted for being supported and maintained in a suspended condition by the aforementioned gasket so as to define within said at least one moulding cavity a first hollow portion extending between the first mould wall and the polarising film and a second hollow portion extending between the polarising film and the second mould wall;
d3) introducing into said first and second hollow portions of said at least one moulding cavity a polymerisable material in liquid phase according to step a1), and
   - at least one chemical compound adapted to modify the spectral characteristics of the transmitted light;
d4) partially cross-linking the layer thus formed so as to obtain a self-supporting layer made of partially cross-linked thermosetting plastic material including reactive functional groups, at least one chemical compound adapted to modify the spectral characteristics of the transmitted light in at least one portion thereof and a polarizing film;
d5) inserting the first self-supporting layer thus obtained into a second mould.

In this manner and as already explained above, it is advantageously possible to manufacture in an alternative way, while achieving the same advantages, an optical element comprising a functionalised layer adapted to modify the spectral characteristics of transmitted light formed by a polarising film embedded within the first self-supporting layer while substantially eliminating the above-mentioned problem of displacement of the polarising film which affects the manufacturing methods of the prior art.

According to an embodiment which is not part of the invention and in order to obtain a polarising optical element, the aforementioned at least one element adapted to modify the spectral characteristics of the transmitted light may be a polarising film associated to at least one surface of the first self-supporting layer made of partially cross-linked thermosetting plastic material.

Within the framework of this embodiment, the aforementioned step d) is then carried out by means of the steps of:
d1) providing a first mould comprising:
   - a first mould wall optically worked and polished on at least one side,
   - a second mould wall optically worked and polished on at least one side and defining with the first mould wall at least one moulding cavity,
   - a gasket laterally sealing said at least one moulding cavity,
d2) associating a polarising film to one of said first or second mould walls or supporting a polarising film adjacent to one of said first or second mould walls by means of said gasket;
d3) introducing into said at least one moulding cavity of the first mould a polymerisable material in liquid phase including:
   - a first prepolymer and/or a first monomer including reactive functional groups,
   - a reactive component including functional groups capable of chemically reacting with the reactive functional groups of the first prepolymer and/or of the first monomer, and optionally
   - at least one compound adapted to modify the spectral characteristics of the transmitted light;
d4) partially cross-linking the layer thus formed so as to obtain a self-supporting layer made of partially cross-linked thermosetting plastic material including reactive functional groups, a polarising film associated to at least one surface thereof and optionally at least one compound adapted to modify the spectral characteristics of the transmitted light;
d5) inserting the first self-supporting layer thus obtained into a second mould.

In this manner and as already explained above, it is advantageously possible to manufacture in an alternative way, while achieving the same advantages, an optical element comprising a functionalised layer adapted to modify the spectral characteristics of transmitted light formed by a polarising film associated to at least one surface of the first self-supporting layer further reducing and substantially eliminating the risk that the polarising film may be displaced from its desired position.

According to an embodiment which is not part of the invention, the aforementioned at least one element adapted to modify the spectral characteristics of the transmitted light is a polarising layer and the method further comprises the step of associating the polarising layer to at least a surface of the first self-supporting layer made of thermosetting plastic material before carrying out said step e) of forming the second layer.

As mentioned above, the polarising layer may comprise a polarising film or a polarising coating, while the step of associating the polarising layer to at least a surface of the first self-supporting layer may be carried out according to techniques known in the art such as by simply laying the polarising layer on a surface of the first self-supporting layer, by grafting a suitably surface-treated polarising film to said surface or by forming on this surface a polarising layer according to procedures known in the art

In this manner, it is advantageously possible to manufacture an optical element comprising a functionalised layer adapted to modify the spectral characteristics of transmitted light comprising a polarising layer while substantially reducing or eliminating the above-mentioned problems which affect the manufacturing methods of the prior art related to a possible displacement of the polarising layer and/or to possible alterations of the physical and optical properties of the polarising layer consequent to the development of high temperatures at the exothermic peak whenever thermosetting resins with strongly exothermic polymerisation reaction are used.

Preferably, the step a) or the step d) described above of providing in a mould a self-supporting layer made of partially cross-linked thermosetting plastic material is carried out by means of cast moulding.

In this manner, it is advantageously possible to achieve all the technical effects related to the cast moulding technique, i.e. possibility of using lower moulding temperatures, possibility of obtaining an optical element having optimal optical properties and substantially lacking birefringence phenomena.

In a preferred embodiment, the step of providing in the mould the self-supporting layer made of partially cross-linked thermosetting plastic material is carried out by casting said polymerisable material in liquid phase into the mould cavity, maintaining said material at a temperature comprised between 5°C and 120°C, more preferably comprised between 15°C and 110°C and, still more preferably, comprised between 20°C and 30°C in the case of thermosetting plastic materials belonging to the bis(allyl) carbonate class or comprised between 55°C and 85°C in the case of thermosetting plastic materials belonging to the polyurethane class.

In this way, it is advantageously possible to carry out the step of cast moulding and subsequent partial cross-linking in an optimal manner.

For the purposes of the present description and of the claims that follow, except where otherwise indicated, all numbers expressing amounts, quantities, percentages, and so forth, are to be understood as being preceded in all instances by the term "about". Also, all ranges of numerical entities include all the possible combinations of the maximum and minimum numerical values and all the possible intermediate ranges therein, in addition to those specifically indicated herein.

In a preferred embodiment, the step of partially cross-linking the self-supporting layer made of thermosetting plastic material is carried out by maintaining said mould at a temperature comprised between 25°C and 300°C for a time comprised between 10' and 20h.

More preferably, such a step is carried out by maintaining said mould at a temperature comprised between 50°C and 200°C for a time comprised between 30' and 10h and, still more preferably, at a temperature comprised between 60°C and 150°C for a time comprised between 1h and 3h.

In a preferred embodiment, the method of the invention further comprises the step of cooling the self-supporting layer made of partially cross-linked thermosetting plastic material provided in the mould before carrying out the subsequent steps.

In this way, it is advantageously possible to improve the characteristics of operative flexibility of the method by manufacturing an intermediate semi-finished product which can be, if desired, stored for a given time period before carrying out the subsequent manufacturing steps.

Within the framework of this preferred embodiment, the cooling step of the self-supporting layer is carried out so as to reduce the temperature of the layer to a value comprised between 25°C and 80°C.

Preferably, such a cooling step can be carried out by cooling the mould including the self-supporting layer made of thermosetting plastic material in free air, or by extracting the self-supporting layer made of thermosetting plastic material from the mould and allowing the layer to stay in free air until it reaches the desired temperature.

Within the framework of this preferred embodiment, the method of the invention preferably comprises the additional step of heating the self-supporting layer made of partially cross-linked thermosetting plastic material and the mould to a temperature comprised between 30°C and 110°C before carrying out the step of forming the second layer of polymerisable material in liquid phase on at least one surface of the self-supporting layer.

In this way, an improved distribution of the second layer of polymerisable liquid material on at least one surface of the previously provided self-supporting layer, is advantageously attained.

For the purposes of the invention, the first self-supporting layer made of partially cross-linked thermosetting plastic material preferably has a thickness comprised between 0.2 and 30 mm as a function of the characteristics to be imparted to the optical element and to the layer itself.

Thus, for example, if the first self-supporting layer made of partially cross-linked thermosetting plastic material is optically transparent, it preferably has a thickness comprised between 1 and 30 mm, more preferably comprised between 2 and 13 mm and, still more preferably, comprised between 5 and 10 mm.

In this way, such a layer is relatively thick and allows to carry out an optional mechanical processing of the optical element without damaging the layer adapted to modify the light spectral characteristics.

For the purposes of the invention, also the second layer made of thermosetting plastic material of the optical element preferably has a thickness comprised between 0.2 and 30 mm as a function of the characteristics to be imparted to the optical element and to the layer itself.

Thus, for example, if the first or the second self-supporting layer made of partially cross-linked thermosetting plastic material is adapted to modify the light spectral characteristics, it preferably has a thickness comprised between 0.2 and 3 mm, more preferably comprised between 0.3 and 2 mm and, still more preferably, comprised between 0.7 and 1.5 mm.

In this way, such a layer is relatively thin and allows to obtain the desired modification of the light spectral characteristics with an advantageous quantitatively reduced use of compounds capable of attaining this effect and also finished products with relatively low minimum thicknesses and optionally with a reduction or elimination of any problems related to possible damages of the polarising layer if thermosetting resins having strongly exothermic polymerisation reaction are used.

Polyurethane polymers suitable for the purposes of the invention are described for example in US patents nos. 5,962,617 and 6,127,505 the content of which is herein entirely incorporated by reference.

Polyol-allyl-carbonate polymers suitable for the purposes of the invention are widely known to those skilled in the art and comprise in particular the diethylene (bis)allylcarbonate commercially known with the trade name of CR39®.

In a preferred embodiment, also the step of providing the second layer adapted to modify the spectral characteristics of the light transmitted by the final optical element is carried out by means of the cast moulding technique, so as to achieve the advantages mentioned above with reference to the manufacturing of the first self-supporting layer made of partially cross-linked thermosetting plastic material.

Within the framework of this preferred embodiment, the aforementioned step b) of forming the second layer is then carried out by casting the polymerisable material in liquid phase into at least one cavity defined in the mould between said at least one surface of the self-supporting layer and an inner surface of the mould.

Within the framework of this preferred embodiment, the aforementioned step b) is carried out by casting the polymerisable material in liquid phase into the mould cavity, maintaining said material at a temperature comprised between 5°C and 120°C, more preferably comprised between 15°C and 1105°C and, still more preferably, comprised between 20°C and 30°C in the case of thermosetting plastic materials belonging to the bis(allyl) carbonate class, or comprised between 55°C and 85°C in the case of thermosetting plastic materials belonging to the polyurethane class.

In a preferred embodiment, the aforementioned reactive component comprises: at least a second prepolymer and/or at least a second monomer and/or at least one cross-linking agent and/or at least one polymerisation catalyst of the first prepolymer and/or of the first monomer, in liquid phase or solid phase, including functional groups capable of chemically reacting with the reactive functional groups of the first prepolymer and/or of the first monomer and optionally with the reactive functional groups of the self-supporting layer made of partially cross-linked thermosetting plastic material.

Preferably, the aforementioned at least a second prepolymer is selected from the group comprising prepolymers including functional groups reactive with the -NCO isocyanate groups and prepolymers including functional groups reactive with the -CH=CH₂ groups.

Preferably, the aforementioned at least a second monomer is selected from the group comprising: monomers including functional groups reactive with the -NCO isocyanate groups and monomers including functional groups reactive with the -CH=CH₂ groups. Preferably, the aforementioned at least one cross-linking agent is selected from the group comprising: cross-linking agents including functional groups reactive with the NCO isocyanate groups and cross-linking agents including functional groups reactive with the -CH=CH₂ groups.

Preferably, the aforementioned at least one catalyst is selected from the group comprising: catalysts including functional groups reactive with the -NCO isocyanate groups and catalysts including functional groups reactive with the -CH=CH₂ groups.

Examples of functional groups reactive with the -NCO isocyanate groups are -OH groups of polyoxyhydroxylated compounds, -SH groups of thiol compounds or NH₂ groups of amine compounds known by those skilled in the art and described, for example in the aforementioned US patents Nos. 5,962,617 and 6,127,505, while examples of functional groups reactive with the -CH=CH₂ groups are O-O groups of suitable organic compounds, such as for example peroxides and perketals, these too known to those skilled in the art.

In a preferred embodiment of the invention, the aforementioned steps c) or f) of cross-linking the first and second layer in the mould are carried out by maintaining said mould at a temperature comprised between 25° and 300°C for a time comprised between 3h and 25 h.

More preferably, this cross-linking step is carried out by maintaining the mould at a temperature comprised between 50°C and 200°C for a time comprised between 6 and 20h and, still more preferably, at a temperature comprised between 60°C and 150°C for a time comprised between 8h and 15h.

In an alternative preferred embodiment, the method of the invention allows to manufacture an optical element having differentiated properties capable of modifying the spectral characteristics of the transmitted light in both the above-described layers.

Thus, in a first embodiment, the method of the invention can further comprise a step g) of introducing into at least one portion of said self-supporting layer made of thermosetting plastic material at least one element adapted to modify the spectral characteristics of the transmitted light, before forming on at least one surface of the self-supporting layer thus obtained, the second layer of polymerisable material in liquid phase including at least one element adapted to modify in a different manner the spectral characteristics of the transmitted light.

For the purposes of the invention, which foresees that the aforementioned at least one element adapted to modify the spectral characteristics of the transmitted light is a chemical compound, the aforementioned steps d3), d4) or g) are preferably carried out by means of immersion coating, heat transfer in liquid phase, heat transfer in vapour phase, spray coating of said at least one portion of the self-supporting layer made of thermosetting plastic material effected with techniques known to those skilled in the art.

In an alternative preferred embodiment, the step of introducing the aforementioned at least one compound adapted to modify the spectral characteristics of the transmitted light can be carried out by imparting light modification characteristics of differentiated type in different zones of the self-supporting layer, for example of shaded-off type according to what is disclosed in European patent application EP 0 992 832 the content of which is herein entirely incorporated by reference.

For the purposes of the invention, the aforementioned at least one compound adapted to modify the spectral characteristics of the transmitted light is preferably selected from dyeing compounds adapted to filter the visible light, photochromatic compounds and mixtures thereof.

Preferably, such dyeing compounds comprise azobenzene chromophore groups, anthraquinone chromophore groups, and mixtures thereof, while the photochromatic compounds are preferably selected from the group comprising spiropyrans, spirooxazines, fulgides, and mixtures thereof.

Polarising films suitable for the purposes of the invention include a variety of different structures and materials. These structures include unsupported or non-laminated polarising films made of PVA or PET, and polarising films supported by means of non-removable and permanent symmetric or asymmetric lamination of transparent plastic materials which predominantly have supporting functions or functions of physical and/or chemical compatibilisation such as, for example, polycarbonate, cellulose triacetate, cellulose diacetate and cellulose acetobutyrate.

In a preferred embodiment, the polarising film can be previously subjected to physical and/or chemical treatments known in the related art and adapted to favour adhesion or grafting between the film itself and the polymerisable material in liquid phase used to manufacture the first and the second layers of the optical element or to the self-supporting layer made of partially cross-linked thermosetting plastic material.

A part of the chemical and/or physical treatments adapted to promote the adhesion of the polarising film for the purposes of the present invention are, for example, disclosed in US patents nos. 7,002,744 and US 6,585,373 the content of which is herein entirely incorporated by reference.

In a further preferred embodiment, the method of the invention may further comprise the step of associating by means of techniques known in the art a polarising layer, such as for example a polarising film or a polarising coating, to at least one surface of the monolithic optical element made of thermosetting plastic material.

Advantageously, it is possible in this way to vary in a different way the light transmission characteristics reducing the glare phenomena due to the reflection of light on reflecting surfaces as already illustrated in connection with the previous embodiments of the invention.

According to a further aspect thereof, the invention relates to a polarising or non-polarising optical element made of thermosetting plastic material, in particular to a polarising or non-polarising optical element obtainable by means of the method described above. Such polarising or non-polarising optical elements comprise:
i) a first layer made of thermosetting plastic material having predetermined light transmission characteristics, and
ii) a second layer made of thermosetting plastic material integrally formed with said first layer and functionalised so as to have, in at least a portion thereof, differentiated light transmission characteristics with respect to said first layer,
and have light transmission characteristics with substantial absence of birefringence.

Advantageously, the substantial absence of birefringence of the optical element - verifiable by means of the test reported in the standards ASTM D4093-95(2005)e1 - can be achieved thanks to the preferred methods of cast moulding of the various layers which form the optical element itself.

In a first preferred embodiment, the optical element comprises a first, optically transparent, thicker layer and a second thinner layer including at least one element adapted to modify the spectral characteristics of the transmitted light in at least a portion thereof.

As illustrated above, such an optical element can be advantageously mechanically worked within the first thicker layer so as to obtain a dyed or photochromatic ophthalmic lens having at the same time the desired vision correction characteristics.

In an alternative embodiment, the first thicker layer of the optical element may include at least one element adapted to modify the spectral characteristics of the transmitted light in at least a portion thereof.

In a further preferred embodiment and as illustrated above, the optical element of the invention can comprise a first and a second layer both adapted to modify the spectral characteristics of the transmitted light, preferably in a differentiated manner (for example one coloured or polarising and the other photochromatic), each including at least one appropriate element suitable for the purpose.

As illustrated above, the element adapted to modify the spectral characteristics of the transmitted light may be incorporated or embedded within a first and/or a second layer of the optical element or may be associated to at least one surface of the first and/or of the second layer before forming the optical element. In all these embodiments, therefore, the element adapted to modify the spectral characteristics of the transmitted light is incorporated or embedded within the optical element.

In further a preferred embodiment of the optical element according to the invention, the aforementioned at least one element adapted to modify the spectral characteristics of the transmitted light may be a chemical compound adapted to modify the spectral characteristics of the transmitted light.

Within the framework of this embodiment, the optical element of the invention can further comprise a polarising layer, such as for example a polarising film or a polarising coating, associated to at least one surface thereof, so as to modify the spectral characteristics of the transmitted light in a differentiated manner and also reduce glare phenomena.

In a preferred embodiment of the invention, the aforementioned at least one element adapted to modify the spectral characteristics of the transmitted light may be a polarising layer and the optical element is accordingly a polarising one capable of reducing glare phenomena.

As illustrated above, the polarising layer may be incorporated within one of the layers which constitute the final solid monolithic optical element made of thermosetting plastic material or may be associated to at least one surface of one of the layers forming the optical element.

The polarising optical element may be adapted to modify the spectral characteristics of the transmitted light in a differentiated manner by including in the layer not including the polarising layer at least one appropriate compound suitable for the purpose (for example a dye or a photochromatic compound).

As illustrated above, in the optical element of the invention, the aforementioned first and second layers preferably have a thickness comprised between 0.2 and 30 mm.

In a preferred embodiment, the polarising or non-polarising optical element of the invention can be in the form of a semi-finished product for the manufacture of oculars for eyeglasses or in the form of an ophthalmic lens for eyeglasses obtained by means of mechanical processing of said semi-finished product.

In a preferred embodiment, the polarising or non-polarising optical element of the invention can be in the form of a finished product such as an ocular, such as for example a lens for eyeglasses, a visor, a protective mask or a portable screen.

As mentioned above, within the framework of the invention the term: ocular, is used to identify elements adapted to allow vision, such as for example a lens for eyeglasses, a visor, a protective mask or a portable screen, as defined by European Standard CEN EN 165.

In a further preferred embodiment, the polarising or non-polarising optical element further comprises a mirror coating and/or an anti-reflection coating on at least one surface thereof, so as to be able to advantageously attain further and improved optical properties and/or light filtration properties.

According to a further aspect thereof, the invention also relates to an eye-protecting device comprising a polarising or non-polarising optical element as described above.

In a preferred embodiment, such a protection device may essentially consist of a pair of eyeglasses comprising a support frame in which a pair of lens-shaped oculars is mounted.

The lenses can be ophthalmic, i.e. capable of correcting vision defects, or they can lack any corrective capacity.

In a further preferred embodiment, such a protection device comprises an ocular in the form of a single-piece visor or mask including an upper edge, a lower edge, as well as a first and a second lens portions formed on opposite sides of a groove centrally formed in said lower edge.

Additional features and advantages of the invention will be better apparent from the detailed description of some preferred but non-exclusive embodiments of a method and of a polarising or non-polarising optical element according to the present invention.

### Brief description of the drawings

This description will be made below with reference to the appended drawings, provided only for indicative and therefore non-limiting purposes, in which:
- Figure 1 shows a schematic view in cross section of a first mould adapted to manufacture, by means of cast moulding, a self-supporting layer made of partially cross-linked thermosetting plastic material according to a first embodiment of the invention;
- Figure 2 shows a schematic view of a second mould adapted to manufacture, by means of cast moulding, an optical element in the form of a lens blank according to a first preferred embodiment of the invention, the self-supporting layer made of partially cross-linked thermosetting plastic material being visible inside the mould;
- Figure 3 shows a schematic view in cross section of an optical element in the form of a lens blank according to a first preferred embodiment of the invention obtained by means of the mould of figure 2;
- Figure 4 shows a schematic view in cross section of a third mould adapted to manufacture, by means of cast moulding, a self-supporting layer made of partially cross-linked thermosetting plastic material according to a second embodiment of the invention;
- Figure 5 shows a schematic section view of a fourth mould adapted to manufacture, by means of cast moulding, an optical element in the form of a lens blank according to a second preferred embodiment of the invention, the self-supporting layer made of partially cross-linked thermosetting plastic material being visible inside the mould;
- Figure 6 shows a schematic view in cross section of an optical element in the form of a lens blank according to a second preferred embodiment of the invention obtained from the mould of figure 5;
- Figure 7 shows a schematic view of a fifth mould adapted to manufacture, by means of cast moulding, a polarising optical element in the form of a lens blank according to a preferred embodiment of the invention, a polarising film having a suitable shape and size and adapted to be maintained in a suspended condition and the self-supporting layer made of partially cross-linked thermosetting plastic material being visible inside the mould;
- Figure 8 shows a schematic view in cross section of a polarising optical element in the form of a lens blank according to a preferred embodiment of the invention obtained by means of the mould of figure 7.

### Detailed description of the presently preferred embodiments

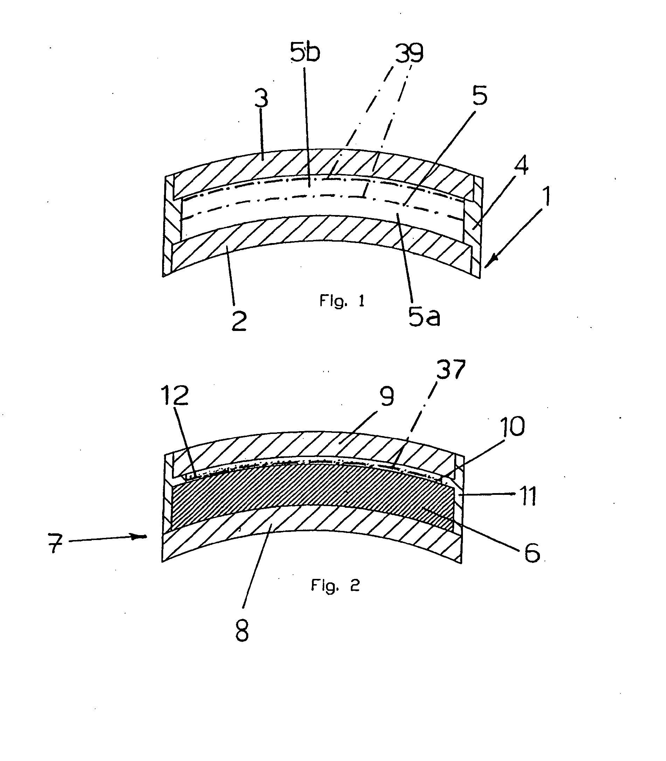

With reference to figure 1, a mould adapted to manufacture, by means of cast moulding, a self-supporting layer made of partially cross-linked thermosetting plastic material according to a first embodiment of the manufacturing method of the invention, is generally indicated at 1.

In a way known *per se*, the mould 1 comprises a bottom wall 2 and a top wall 3 made of a suitable material, for example glass or metal, defining a moulding cavity 5 laterally sealed by a gasket 4 made of a suitable material, for example polyethylene.

According to this preferred embodiment of the method of the invention, the mould 1 allows to form by means of cast moulding a first self-supporting layer 6 made of partially cross-linked thermosetting plastic material by means of the steps of:
- introducing into the moulding cavity 5 of the mould 1 a layer of a polymerisable material in liquid phase including:
   - a first prepolymer and/or a first-monomer including reactive functional groups,
   - a reactive component including functional groups capable of chemically reacting with the reactive functional groups of the first prepolymer and/or of the first monomer,
- partially cross-linking the layer thus formed so as to obtain a self-supporting layer 6 made of partially cross-linked thermosetting plastic material including reactive functional groups.

Preferably, these steps are carried out according to what has been illustrated hereinabove and detailed in a more specific manner in the following Example 1.

In a subsequent step of the method, the self-supporting layer 6 made of partially cross-linked thermosetting plastic material is positioned in a second mould 7 illustrated in greater detail in figure 2 and including - this too in a way known *per se -* a bottom wall 8 and a top wall 9 made of a suitable material, for example glass or metal, and defining with the self-supporting layer 6 a moulding cavity 10 laterally sealed by a gasket 11 made of a suitable material, for example polyethylene.

Preferably, the top wall 9 has an optically worked and polished mould side (i.e. the side facing the moulding cavity 10) in order to confer to the outer convex surface of the optical element to be manufactured suitable optical and finishing properties.

In subsequent steps of the method, the following operations are carried out:
- forming on the top outer surface of the self-supporting layer 6 (the surface facing the cavity 10), a second layer 12 including:
- a polymerisable material in liquid phase including:
   i) a first prepolymer and/or a first monomer including reactive functional groups capable of chemically reacting with the reactive functional groups of the self-supporting layer 6 made of partially cross-linked thermosetting plastic material,
   ii) a reactive component including functional groups capable of chemically reacting with the reactive functional groups of the first prepolymer and/or of the first monomer and optionally with the reactive functional groups of the self-supporting layer 6 made of partially cross-linked thermosetting plastic material,
- at least one element adapted to modify the spectral characteristics of the transmitted light, and

c) cross-linking said first and second layers 6, 12 in the mould 7 so as to form a solid monolithic optical element 13 made of thermosetting plastic material comprising at least one functionalised layer (the layer 12) adapted to modify the spectral characteristics of the transmitted light.

In an embodiment of the invention, the at least one element adapted to modify the spectral characteristics of the transmitted light is a chemical compound included and preferably homogeneously dispersed in the polymerisable material in liquid phase.

In this way, the solid monolithic optical element 13 is non-polarising optical element and the step of forming the second layer 12 on the top outer surface of the self-supporting layer 6 may be carried out by cast moulding.

According to an embodiment which is not part of the invention, a polarising optical element 13 may be manufactured by carrying out the additional step of associating a polarising layer 37 (indicated with fanthom lines in figure 2) to the top outer surface of the first self-supporting layer 6 before carrying out the aforementioned step of forming on the top outer surface of the self-supporting layer 6 the functionalised layer 12.

As illustrated above, the polarising layer 37 may be either a polarising film or a polarising coating and may be associated to the top outer surface of the first self-supporting layer 6 according to techniques known in the art.

In this way, the solid monolithic optical element 13 is a polarising optical element and the step of forming the second functionalised layer 12 on the top outer surface of the self-supporting layer 6 may be carried out by first associating polarising layer 37 to the self-supporting layer 6 and then by casting thereon the polymerisable material in liquid phase.

According to another variant of this preferred embodiment, a polarising optical element 13 may be manufactured by carrying out before the step of forming the second layer 12 the additional steps of:
- associating to the gasket 4 of the mould 1 a polarising film 39 (indicated with fanthom lines in figure 1) adapted for being supported and maintained in a suspended condition by the gasket 4 so as to define within the moulding cavity 5 a first hollow portion 5a extending between the bottom wall 2 and the polarising film 39 and a second hollow portion 5b extending between the polarising film 39 and the top wall 3;
- introducing into said first and second hollow portions 5a, 5b of the moulding cavity 5a polymerisable material in liquid phase including:
   - a first prepolymer and/or a first monomer including reactive functional groups,
   - a reactive component including functional groups capable of chemically reacting with the reactive functional groups of the first prepolymer and/or of the first monomer,
- partially cross-linking the layer thus formed so as to obtain a self-supporting layer 6 made of partially cross-linked thermosetting plastic material including reactive functional groups and the polarising film 39;
- optionally introducing into at least one portion of the self-supporting layer 6 thus obtained at least one compound adapted to modify the spectral characteristics of the transmitted light; and
- inserting the first self-supporting layer 6 thus obtained into the second mould 7.

According to another variant of this preferred embodiment, a polarising optical element 13 may be manufactured by carrying out before the step of forming the second layer 12 the additional steps of:
- associating to the gasket 4 of the mould 1 a polarising film 39 adapted for being supported and maintained in a suspended condition by the gasket 4 so as to define within the moulding cavity 5 a first hollow portion 5a extending between the bottom wall 2 and the polarising film 39 and a second hollow portion 5b extending between the polarising film 39 and the top wall 3;
- introducing into said first and second hollow portions 5a, 5b of the moulding cavity 5 a polymerisable material in liquid phase including:
   - a first prepolymer and/or a first monomer including reactive functional groups,
   - a reactive component including functional groups capable of chemically reacting with the reactive functional groups of the first prepolymer and/or of the first monomer, and optionally
   - at least one compound adapted to modify the spectral characteristics of the transmitted light;
- partially cross-linking the layer thus formed so as to obtain a self-supporting layer 6 made of partially cross-linked thermosetting plastic material including reactive functional groups, the polarising film 39 and optionally at least one compound adapted to modify the spectral characteristics of the transmitted light; and
- inserting the first self-supporting layer 6 thus obtained into the second mould 7.

According to an embodiment which is not part of the invention, a polarising optical element 13 may be manufactured by carrying out before the step of forming the second layer 12 the additional steps of:
- associating a polarising film 39 (indicated with fanthom lines in figure 1) to the top wall 3 of the mould 1 or supporting the polarising film 39 adjacent to the top wall 3 by means of the gasket 4;
- introducing into the moulding cavity 5 of the mould 1 a polymerisable material in liquid phase including:
   - a first prepolymer and/or a first monomer including reactive functional groups,
   - a reactive component including functional groups capable of chemically reacting with the reactive functional groups of the first prepolymer and/or of the first monomer,
- partially cross-linking the layer thus formed so as to obtain the self-supporting layer 6 made of partially cross-linked thermosetting plastic material including reactive functional groups and the polarising film 39 associated to a top outer surface thereof;
- optionally introducing into at least one portion of the self-supporting layer 6 thus obtained at least one compound adapted to modify the spectral characteristics of the transmitted light; and
- inserting the first self-supporting layer 6 thus obtained into the second mould 7.

According to an embodiment which is not part of the invention, a polarising optical element 13 may be manufactured by carrying out before the step of forming the second layer 12 the additional steps of:
- associating a polarising film 39 to the top wall 3 of the mould 1 or supporting the polarising film 39 adjacent to the top wall 3 by means of the gasket 4;
- introducing into the moulding cavity 5 of the mould 1 a polymerisable material in liquid phase including:
   - a first prepolymer and/or a first monomer including reactive functional groups,
   - a reactive component including functional groups capable of chemically reacting with the reactive functional groups of the first prepolymer and/or of the first monomer, and optionally
   - at least one compound adapted to modify the spectral characteristics of the transmitted light;
- partially cross-linking the layer thus formed so as to obtain the self-supporting layer 6 made of partially cross-linked thermosetting plastic material including reactive functional groups, the polarising film 39 associated to a top outer surface thereof and optionally at least one compound adapted to modify the spectral characteristics of the transmitted light; and
- inserting the first self-supporting layer 6 thus obtained into the second mould 7.

If, as illustrated above, the polymerisable material in liquid phase incorporates a chemical compound adapted to modify the spectral characteristics of the transmitted light or if such a compound is introduced into the self-supporting layer 6, it is possible to impart to the optical element 13 differentiated properties capable of modifying the spectral characteristics of the transmitted light and deriving from said chemical compound and/or from the polarising layer 37.

On the other hand, if the polymerisable material in liquid phase does not incorporate any chemical compound adapted to modify the spectral characteristics of the transmitted light or if such a compound is not introduced into the self-supporting layer 6, it is possible to manufacture a polarising optical element 13 capable of modifying the spectral characteristics of the transmitted light thanks to the polarising layer 37 or 39 included in the first or second layers 6, 12 or located therebetween in an embodiment which is not part of the invention.

Advantageously, the self-supporting layer 6 abuts in all the variants of this embodiment against the bottom wall 8 of the mould 7 and contributes to define the cavity 10 inside which the elements intended to form the functionalised layer 12 adapted to modify the spectral characteristics of the transmitted light are cast.

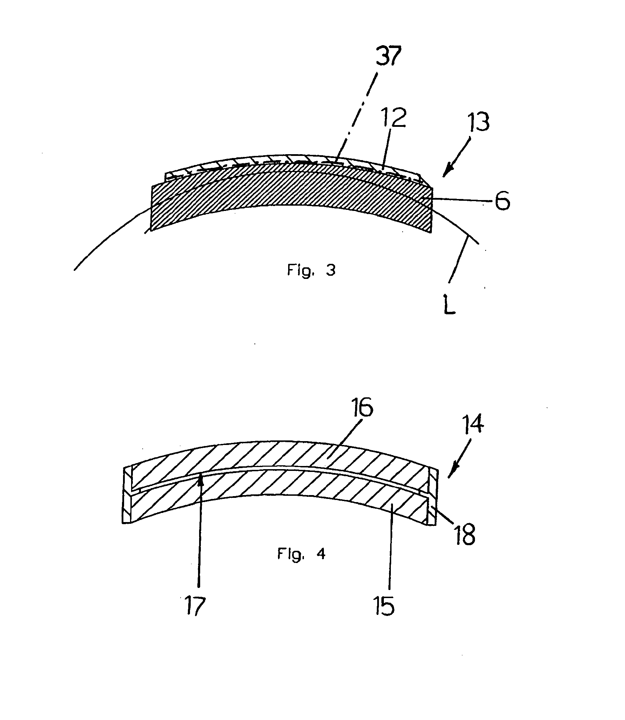

In this preferred embodiment and as better illustrated in figure 3, the monolithic optical element 13 may be in the form of a blank or semi-finished product for manufacturing a non-polarising or polarising ophthalmic lens by means of mechanical processing along a working surface indicated at L in such a figure or in the form of a finished product such an ocular for eyeglasses.

With reference to figures 4-6, a second embodiment of the method according to the invention for manufacturing an optical element made of thermosetting plastic material and comprising at least one functionalised layer adapted to modify the spectral characteristics of the transmitted light will now be illustrated.

In figure 4, a mould adapted to manufacture by means of cast moulding a self-supporting layer made of partially cross-linked thermosetting plastic material according to this second embodiment of the method is generally indicated at 14.

In a way known *per se,* the mould 14 comprises a bottom wall 15 and a top wall 16 made of a suitable material, for example glass or metal, defining a moulding cavity 17 laterally sealed by a gasket 18 made of a suitable material, for example polyethylene.

According to this preferred embodiment of the method according to the invention, the mould 14 allows to provide by means of cast moulding a first self-supporting layer 19 of partially cross-linked thermosetting plastic material by means of the steps of:
- introducing into the moulding cavity 17 of the mould 14 a layer of a polymerisable material in liquid phase including:
   - a first prepolymer and/or a first monomer including reactive functional groups,
   - a reactive component including functional groups capable of chemically reacting with the reactive functional groups of the first prepolymer and/or first monomer,
- partially cross-linking the layer thus formed so as to obtain a self-supporting layer 19 made of partially cross-linked thermosetting plastic material including reactive functional groups.

Preferably, these steps are carried out according to what has been illustrated hereinabove and detailed in a more specific manner in the following Example 2.

In a subsequent step of the method, at least one compound adapted to modify the spectral characteristics of the transmitted light is introduced into at least a portion of the self-supporting layer 19 for example by means of heat transfer in liquid phase, by immersing the self-supporting layer 19 in a bath including at least one compound adapted to modify the spectral characteristics of the transmitted light.

In an alternative preferred embodiment, the method according to the invention allows to provide by means of cast moulding a first self-supporting layer 19 made of partially cross-linked thermosetting plastic material having in at least one portion thereof characteristics capable to modify the spectral characteristics of the transmitted light by means of the steps of:
- introducing into the moulding cavity 17 of the mould 14 a layer of a polymerisable material in liquid phase including:
   - a first prepolymer and/or a first monomer including reactive functional groups,
   - a reactive component including functional groups capable of chemically reacting with the reactive functional groups of the first prepolymer and/or of the first monomer,
   - at least one compound adapted to modify the spectral characteristics of the transmitted light,
- partially cross-linking the layer thus formed so as to obtain a self-supporting layer 19 made of partially cross-linked thermosetting plastic material including reactive functional groups and at least one compound adapted to modify the spectral characteristics of the transmitted light in at least one portion thereof.

In a subsequent step of the method, the self-supporting layer 19 made of partially cross-linked thermosetting plastic material is positioned in a further mould 21 including this too in a way known *per se -* a bottom wall 22 and a top wall 23 made of a suitable material, for example glass or metal, and defining with the self-supporting layer 19 a moulding cavity 20 laterally sealed by a gasket 24 made of a suitable material, for example polyethylene.

Preferably, the top wall 23 has an optically worked and polished mould side (i.e. the side facing the moulding cavity 20) in order to confer to the outer convex surface of the optical element to be manufactured suitable optical and finishing properties.

In subsequent steps of the method, the following operations are carried out:
- forming on the bottom surface of the self-supporting layer 19 (the surface facing the cavity 20) a second layer 25 of a polymerisable material in liquid phase including:
   - a first prepolymer and/or first monomer including reactive functional groups capable of chemically reacting with the reactive functional groups of the self-supporting layer 19 made of partially cross-linked thermosetting plastic material, and
   - a reactive component including functional groups capable of chemically reacting with the reactive functional groups of the first prepolymer and/or first monomer and optionally with the reactive functional groups of the self-supporting layer 19 made of partially cross-linked thermosetting plastic material,
- cross-linking said first and second layers 19, 25 in the mould 21 so as to form a solid monolithic optical element 26 made of thermosetting plastic material comprising at least one functionalised layer adapted to modify the spectral characteristics of the transmitted light.

In both the aforementioned embodiments, the solid monolithic optical element 26 obtained is non-polarising optical element and the step of forming the second layer 25 on the bottom surface of the self-supporting layer 19 may be carried out by cast moulding.

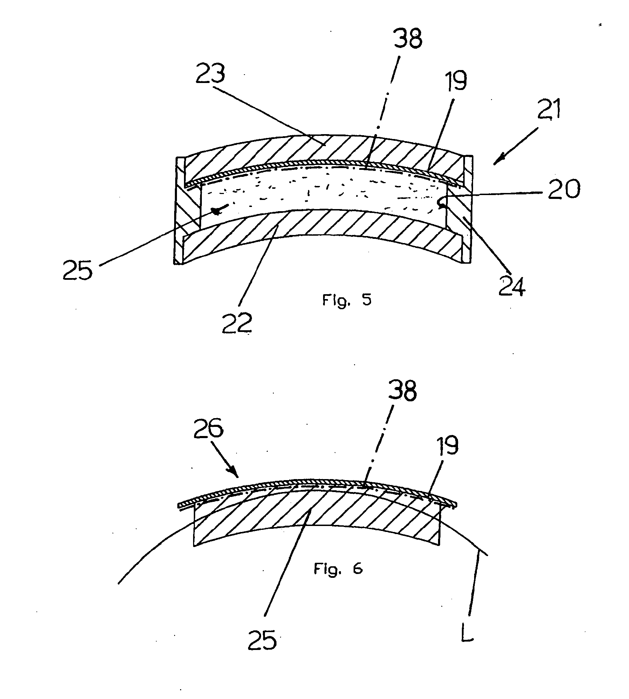

According to an embodiment, which is not part of the invention, a polarising optical element 26 may be manufactured by carrying out the additional step of associating a polarising layer 38 (indicated with fanthom lines in figure 5) to the bottom surface of the first self-supporting layer 19 before carrying out the aforementioned step of forming the layer 25 on the bottom surface of the self-supporting layer 19.

As illustrated above, the polarising layer 38 may be either a polarising film or a polarising coating and may be associated to the bottom surface of the first self-supporting layer 19 according to techniques known in the art.

In this way, the solid monolithic optical element 26 is a polarising optical element and the step of forming the second layer 25 on the bottom surface of the self-supporting layer 19 may be carried out by first associating polarising layer 38 to the self-supporting layer 19 and then by casting thereon the polymerisable material in liquid phase.

Also in this case, a polarising film may be embedded within the self-supporting layer 19 or associated to a bottom surface thereof by means of the operations already described hereinabove with reference to the embodiments illustrated in figures 1-3.

If, as illustrated above, the polymerisable material in liquid phase incorporates a chemical compound adapted to modify the spectral characteristics of the transmitted light, it is possible to impart to the optical element 26 differentiated properties capable of modifying the spectral characteristics of the transmitted light and deriving from said chemical compound and from the polarising layer 38.

On the other hand, if the polymerisable material in liquid phase does not incorporate any chemical compound adapted to modify the spectral characteristics of the transmitted light, it is possible to manufacture a polarising optical element 26 capable of modifying the spectral characteristics of the transmitted light thanks to the polarising layer 38 included in the first or second layers 19,25 or located therebetween.

Advantageously, in this embodiment the self-supporting layer 19 and, if present, the polarising layer 38 associated thereto, abut in all the variants of this embodiment against the top wall 23 of the mould 21 and are held in position by the gasket 24 thereby contributing to define the moulding cavity 20 inside which the reagents that are intended to form the layer 25 adapted to form the supporting body of the optical element 26 are cast.

Also in this preferred embodiment and as better illustrated in figure 6, the monolithic polarising or non-polarising optical element 26 may be in the form of a blank or semi-finished product for manufacturing an ophthalmic lens by means of mechanical processing along a working surface indicated at L in such a figure or in the form of a finished product such as an ocular for eyeglasses.

With reference to figures 1, 7 and 8, a third embodiment of the method according to the invention for manufacturing a polarising optical element made of thermosetting plastic material and comprising at least one polarising functional layer adapted to modify the spectral characteristics of the transmitted light will now be illustrated.

According to a first step of this preferred embodiment of the method, a first self-supporting layer 6 made of partially cross-linked thermosetting plastic material is manufactured according to the cast moulding technique described above by means of the mould 1 illustrated in figure 1.

Preferably, the steps of manufacturing the self-supporting layer 6 are carried out as detailed in a more specific manner in the following Example 3.

In a subsequent step of the method, the self-supporting layer 6 made of partially cross-linked thermosetting plastic material is positioned in a fifth mould 27 including - this too in a way known *per se -* a bottom wall 28 and a top wall 29 made of a suitable material, for example glass or metal, and defining with the self-supporting layer 6 a moulding cavity 30 laterally sealed by a gasket 31 made of a suitable material, for example polyethylene.

Preferably, the top wall 29 has an optically worked and polished mould side (i.e. the side facing the moulding cavity 30) in order to confer to the outer convex surface of the optical element to be manufactured suitable optical and finishing properties.

In this preferred embodiment, the gasket 31 is suitably shaped and is adapted to support a polarising film 33 and maintain the same in a suspended condition within the moulding cavity 30.

In subsequent steps of the method, the following operations are carried out:
- forming on at least a surface of the self-supporting layer 6 (the surface facing the cavity 30), a second layer 32 including:
   i) a polymerisable material in liquid phase including:
      - a first prepolymer and/or a first monomer including reactive functional groups capable of chemically reacting with the reactive functional groups of the self-supporting layer 6 made of partially cross-linked thermosetting plastic material,
      - a reactive component including functional groups capable of chemically reacting with the reactive functional groups of the first prepolymer and/or of the first monomer and optionally with the reactive functional groups of the self-supporting layer 6 made of partially cross-linked thermosetting plastic material,
      - at least one compound adapted to modify the spectral characteristics of the transmitted light,
   ii) the polarising film 33 adapted for being supported and maintained in a suspended condition by the gasket 31, and

c) cross-linking the first and second layers 6, 32 in the mould 27 so as to form a solid monolithic polarising optical element 34 made of thermosetting plastic material comprising a functionalised layer (the layer 32) adapted to modify the spectral characteristics of the transmitted light thanks to the presence both of the polarising film 33 and of the aforementioned at least one compound adapted to modify the spectral characteristics of the transmitted light.

More specifically, the step of forming the second functionalised layer 32 is preferably carried out by means of the steps of:
- associating to the gasket 31 the polarising film 33 so as to define within the moulding cavity 30 a first hollow portion 35 extending between the self-supporting layer 6 and the polarising film 33 and a second hollow portion 36 extending between the polarising film 33 and the optically worked and polished side of said top wall 29 of the mould 27;
- introducing into the first and second hollow portions 35, 36 of the moulding cavity 30 the aforementioned polymerisable material in liquid phase including:
   - a first prepolymer and/or a first monomer including reactive functional groups,
   - a reactive component including functional groups capable of chemically reacting with the reactive functional groups of the first prepolymer and/or of the first monomer,
   - at least one compound adapted to modify the spectral characteristics of the transmitted light.

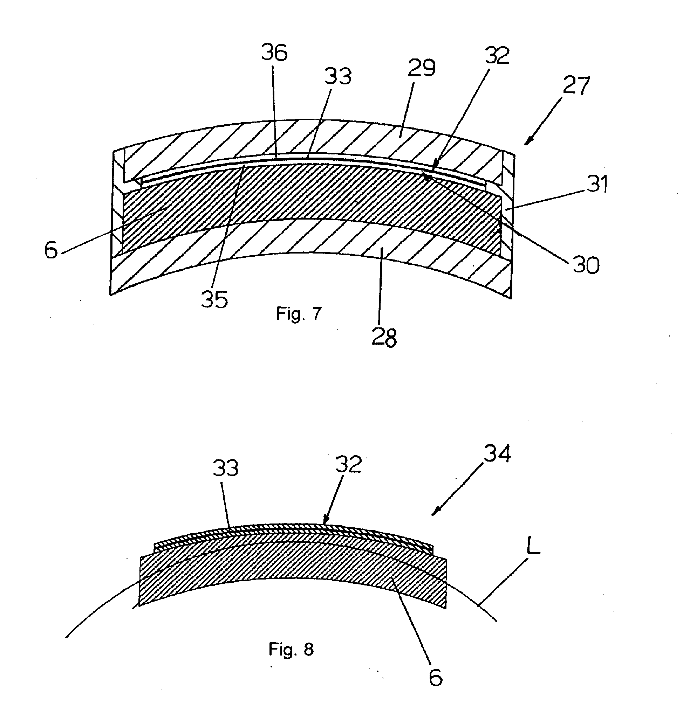

In this preferred embodiment and as better illustrated in figure 7, the polarising film 33 is supported and maintained in a suspended condition by the gasket 31 along a surface of transversal symmetry of the moulding cavity 30 so as to define within the latter two symmetrical hollow portions 35, 36 having substantially the same volume and extending on either side of the polarising film 33.

In this manner, it is advantageously possible to manufacture the monolithic optical element 34 comprising the functionalised layer 32 embedding the polarising film 33 while substantially eliminating the above-mentioned problem of displacement of the polarising film which affects the manufacturing methods of the prior art.

This advantageous technical effect is essentially due both to the more limited volume of the moulding cavity 30 which limits in turn the volume of the polymerisable material in liquid phase to be introduced into the same to form the second layer 32 and to the fact that the introduction of the polymerisable material in liquid phase into the moulding cavity 30 may be carried out by filling, preferably substantially simultaneously, the two symmetrical hollow portions 35, 36 acting on either side of the polarising film 33 thereby avoiding any displacement thereof from the desired position.

If, as illustrated above, the polymerisable material in liquid phase incorporates a chemical compound adapted to modify the spectral characteristics of the transmitted light, it is possible to impart to the optical element 34 differentiated properties capable of modifying the spectral characteristics of the transmitted light and deriving from said chemical compound and from the polarising film 33 both included in the second functionalised layer 32.

On the other hand, if the polymerisable material in liquid phase does not incorporate any chemical compound adapted to modify the spectral characteristics of the transmitted light, it is possible to manufacture a polarising optical element 34 capable of modifying the spectral characteristics of the transmitted light thanks to the polarising film 33 embedded in the second functionalised layer 32.

In an additional embodiment of the method, not shown in the drawings, the polarising film 33 may be associated to the inner surface of the top wall 29 of the mould 27 or be supported adjacent to the inner surface of the top wall 29 by means of the gasket 31 before carrying out the step of forming the second layer 32 which will then bind the polarising film 33.

Advantageously, the self-supporting layer 6 abuts also in these embodiments against the bottom wall 28 of the mould 27 and contributes to define the moulding cavity 30 inside which the elements intended to form the functionalised layer 32 adapted to modify the spectral characteristics of the transmitted light are introduced.

In these preferred embodiments and as better illustrated in figure 8, the monolithic polarising optical element 34 may be in the form of a blank or semi-fnished product for manufacturing an ophthalmic lens by means of mechanical processing along a working surface indicated at L in such a figure or in the form of a finished product such as an ocular for eyeglasses.

Some preparative examples of optical elements according to the invention will now be provided by way of illustration and not of limitation in the following. In these examples, the various compositions will be defined by indicating the parts by weight of each component, unless otherwise specified.

### EXAMPLE 1

### (Manufacturing of a non-polarising optical element)

A bicomponent thermosetting polyurethane resin comprising:
Component A: polyurethane liquid prepolymer having an isocyanate group content of 11%, commercially available from Simula Inc. with the trade name of SIM2020, including UV absorber Uvinul® 3049 (BASF) at the concentration of 0.3% by weight, and
Component B: 1-methyl-3,5-diethyl-2,4- and/or -2,6-diaminobenzene (also known as 3,5-diethyl-2,4-and/or-2,6-toluenediamine) or DETDA available from Alberarle with the commercial name Ethacure® 100,
is cast into the cavity 5 of the mould 1 illustrated in figure 1 and partially cross-linked at 120°C by means of a heat cycle of 60 minutes.

The partially cross-linked optical part thus obtained (layer 6) is then extracted from the mould 1 and the partial cross-linking is verified by observing the presence of unreacted isocyanate groups by means of known FT-IR analysis techniques.

The partially cross-linked optical part (layer 6) is then positioned in the mould 7 so as to define, together with the other parts of the mould 7, the cavity 10 shown in figure 2.

A bicomponent thermosetting polyurethane resin comprising:
Component A: polyurethane liquid prepolymer having an isocyanate group content of 11%, commercially available from Simula Inc. with the trade name of SIM2020, including UV absorber Uvinul® 3049 (BASF - 0.3% by weight), and dyed with the following Solvent dyes according to the Colour Index definition: 0.001% Solvent Green 3, 0.0002% Solvent Blue 97, 0.0003% Solvent Orange 60, 0.0004% Solvent Red 52, and
Component B: DETDA available from Albemarle with the commercial name Ethacure® 100
is then cast into the cavity 10 of the mould 7 and polymerised at 120°C by means of a heat cycle of 20 hours.

The optical element 13 thus obtained (figure 3) can for example be used as a blank or semi-finished product from which an ophthalmic lens adapted to correct vision can be obtained by optical processing and polishing. For example, it is possible to generate a corrective lens having a negative power by optical processing along the working surface L, as shown in figure 3. Advantageously, as illustrated, the generation of the optical surface can be obtained on the concave side of the optical element 13 without damaging the dyed layer 12.

### EXAMPLE 2

### (Manufacturing of a non-polarising optical element)

A bicomponent thermosetting polyurethane resin comprising:
Component A: polyurethane liquid prepolymer having an isocyanate group content of 11%, commercially available from Simula Inc. with the trade name of SIM2020, including UV absorber Uvinul® 3049 (BASF - 0.3% by weight), and
Component B: DETDA available from Albemarle with the commercial name Ethacure® 100,
is cast into the cavity 17 of the mould 14 illustrated in figure 4 and partially cross-linked at 120°C by means of a heat cycle of 60 minutes.

The partially cross-linked optical part thus obtained (layer 19) is then extracted from the mould 14 and the partial cross-linking is verified by observing the presence of unreacted isocyanate groups by means of known FT-IR analysis techniques.

A portion of the partially cross-linked optical part (layer 19) is then dyed by means of heat transfer in liquid phase by immersing the partially cross-linked optical part at a distance of about 5mm from the median line in a water bath heated at 90°C containing the following dyes as defined by the Colour Index International: Disperse Blue 17, Disperse Red 15 and Disperse Yellow 3 suitably mixed in proportions adapted to obtain a grey shading-off dyeing by means of a technique known to those skilled in the art.

The dyed partially cross-linked optical part (layer 19) thus obtained is then positioned in the mould 21 so as to define the cavity 20 shown in figure 5.

The same bicomponent thermosetting polyurethane resin comprising:
Component A: polyurethane liquid prepolymer having an isocyanate group content of 11%, commercially available from Simula Inc. with the trade name of SIM2020, including UV absorber Uvinul® 3049 (BASF - 0.3% by weight), and
Component B: DETDA available from Albemarle with the commercial name Ethacure® 100,
is then cast into the cavity 20 of the mould 21 shown in fig. 5 and polymerised at 120°C by means of heat cycle of 20 hours.

The optical element 26 thus obtained can for example be used as a blank or semi-finished product, from which an ophthalmic lens adapted to correct vision can be obtained by means of optical processing and polishing. For example, it is possible to generate a corrective lens having a negative power by optical processing the working surface L, as shown in figure 6. Advantageously, as illustrated, the generation of the optical surface can be obtained on the concave side of the optical element 26 without damaging the dyed layer 19.

### EXAMPLE 3

### (Manufacturing of a polarising optical element)

A bicomponent thermosetting polyurethane resin comprising:
Component A: polyurethane liquid prepolymer having an isocyanate group content of 11%, commercially available from Simula Inc. with the trade name of SIM2020, including UV absorber Uvinul® 3049 (BASF) at the concentration of 0.3% by weight, and
Component B: 1-methyl-3,5-diethyl-2,4- and/or -2,6-diaminobenzene (also known as 3,5-diethyl-2,4-and/or-2,6-toluenediamine) or DETDA available from Alberarle with the commercial name Ethacure® 100,
is cast into the cavity 5 of the mould 1 illustrated in figure 1 and partially cross-linked at 120°C by means of a heat cycle of 60 minutes.

The partially cross-linked optical part thus obtained (layer 6) is then extracted from the mould 1 and the partial cross-linking is verified by observing the presence of unreacted isocyanate groups by means of known FT-IR analysis techniques.

The partially cross-linked optical part (layer 6) is then positioned in the mould 27 so as to define, together with the other parts of the mould 27, the moulding cavity 30 shown in figure 7.

In this case, the polarising film 33 is associated to the gasket 31, which is adapted to support the polarising film 33 and maintain the same in a suspended condition within the moulding cavity 30 and along a surface of transversal symmetry thereof, so as to define within the latter the hollow portions 35, 36 extending on either side of the polarising film 33 between the film and the self-supporting layer 6 or the optically worked and polished side of the top wall 29 of the mould 27.

A bicomponent thermosetting polyurethane resin comprising:
Component A: polyurethane liquid prepolymer having an isocyanate group content of 11%, commercially available from Simula Inc. with the trade name of SIM2020, including UV absorber Uvinul® 3049 (BASF - 0.3% by weight), and dyed with the following Solvent dyes according to the Colour Index definition: 0.001% Solvent Green 3, 0.0002% Solvent Blue 97, 0.0003% Solvent Orange 60, 0.0004% Solvent Red 52, and
Component B: DETDA available from Albemarle with the commercial name Ethacure® 100
is then cast into the hollow portions 35, 36 of the moulding cavity 30 of the mould 27 and polymerised at 120°C by means of a heat cycle of 20 hours.

The polarising optical element 34 thus obtained (figure 8) can for example be used as a blank or semi-finished product from which a polarising ophthalmic lens adapted to correct vision can be obtained by optical processing and polishing. For example, it is possible to generate a corrective lens having a negative power by optical processing along the working surface L, as shown in figure 8. Advantageously, as illustrated, the generation of the optical surface can be obtained on the concave side of the polarising optical element 34 without damaging the dyed and polarising layer 32.

Obviously, those skilled in the art may introduce modifications and variants to the invention disclosed above in order to satisfy specific and contingent application requirements, which modifications and variants fall anyhow within the protection scope as is defined by the following claims.

## Claims

1. Method for manufacturing an optical element made of thermosetting plastic material and comprising at least one functionalised layer incorporating at least one chemical compound adapted to modify the spectral characteristics of transmitted light, comprising the steps of:
a) providing in a mould a first self-supporting layer made of partially cross-linked thermosetting plastic material including a partially cross-linked polyurethane or polyol-allyl-carbonate polymer comprising reactive functional groups selected from NCO or - CH=CH₂;
b) forming on at least one surface of said self-supporting layer a second layer including:
i) a polymerisable material in liquid phase including:
- a first polyisocyanate or polyol-allyl-carbonate prepolymer and/or a first isocyanate or allyl-carbonate monomer including reactive functional groups capable of chemically reacting with the reactive functional groups of the self-supporting layer made of partially cross-linked thermosetting plastic material, and
- a reactive component including functional groups capable of chemically reacting with the reactive functional groups of the first prepolymer and/or of the first monomer,
wherein said functional groups of the first prepolymer and/or the first monomer are selected from NCO or -CH=CH₂,
wherein said first polyisocyanate prepolymer has a content of NCO isocyanate reactive functional groups comprised between 5 and 50% by weight, an average functionality comprised between 2 and 3, a viscosity lower than 5,000 mPa.s at 70°C,
wherein said first polyol-allyl-carbonate prepolymer has an average functionality comprised between 1 and 2, a viscosity of 5-60 mPa.s at 25°C,
ii) at least one chemical compound adapted to modify the spectral characteristics of the transmitted light,
c) cross-linking said first and second layers in the mould so as to form a solid monolithic optical element made of thermosetting plastic material comprising at least one functionalised layer incorporating said at least one chemical compound adapted to modify the spectral characteristics of the transmitted light.

2. Method for manufacturing an optical element made of thermosetting plastic material and comprising at least one functionalised layer incorporating at least one chemical compound adapted to modify the spectral characteristics of transmitted light, comprising the steps of:
d) providing in a mould a first self-supporting layer made of partially cross-linked thermosetting plastic material including a partially cross-linked polyurethane or polyol-allyl-carbonate polymer comprising reactive functional groups selected from NCO or - CH=CH₂ and at least one chemical compound adapted to modify the spectral characteristics of the transmitted light of the self-supporting layer;
e) forming on at least one surface of said self-supporting layer a second layer including:
i) a polymerisable material in liquid phase including:
- a first polyisocyanate or polyol-allyl-carbonate prepolymer and/or a first isocyanate or allyl-carbonate monomer including reactive functional groups capable of chemically reacting with the reactive functional groups of the self-supporting layer made of partially cross-linked thermosetting plastic material,
- a reactive component including functional groups capable of chemically reacting with the reactive functional groups of the first prepolymer and/or of the first monomer,
wherein said functional groups of the first prepolymer and/or the first monomer are selected from NCO or -CH=CH₂,
wherein said first polyisocyanate prepolymer has a content of NCO isocyanate reactive functional groups comprised between 5 and 50% by weight, an average functionality comprised between 2 and 3, a viscosity lower than 5,000 mPa.s at 70°C,
wherein said first polyol-allyl-carbonate prepolymer has an average functionality comprised between 1 and 2, a viscosity of 5-60 mPa.s at 25°C,
f) cross-linking said first and second layers in the mould so as to form a solid monolithic optical element made of thermosetting plastic material comprising at least one functionalised layer incorporating said at least one chemical compound adapted to modify the spectral characteristics of the transmitted light.

3. Method according to claim 1, wherein said step a) is carried out by means of the steps of:
al) introducing into a mould cavity a layer of a polymerisable material in liquid phase including:
- a first polyisocyanate or polyol-allyl-carbonate prepolymer and/or a first isocyanate or allyl-carbonate monomer including reactive functional groups,
- a reactive component including functional groups capable of chemically reacting with the reactive functional groups of the first prepolymer and/or of the first monomer,
wherein said functional groups of the first prepolymer and/or the first monomer are selected from NCO or -CH=CH₂,
wherein said first polyisocyanate prepolymer has a content of NCO isocyanate reactive functional groups comprised between 5 and 50% by weight, an average functionality comprised between 2 and 3, a viscosity lower than 5,000 mPa.s at 70°C, and
wherein said first polyol-allyl-carbonate prepolymer has an average functionality comprised between 1 and 2, a viscosity of 5-60 mPa.s at 25°C,
a2) partially cross-linking the layer thus formed so as to obtain a self-supporting layer made of partially cross-linked thermosetting plastic material including reactive functional groups.

4. Method according to claim 1, further comprises the step of associating a polarising layer to at least a surface of said monolithic optical element made of thermosetting plastic material.

5. Method according to claim 1, further comprises the step of incorporating a polarising layer within said first self-supporting layer or said second layer.

6. Method according to claim 5, wherein said polarising layer is a polarising film,
wherein said mould comprises:
- the self-supporting layer obtained by means of step a),
- a mould wall optically worked and polished on at least one side and defining with the self-supporting layer at least one moulding cavity,
- a gasket laterally sealing said at least one moulding cavity and adapted to support a polarising film and maintain the same in a suspended condition, and
wherein step b) is carried out by means of the steps of:
b1) associating to said gasket a polarising film adapted for being supported and maintained in a suspended condition by the aforementioned gasket so as to define within said at least one moulding cavity a first hollow portion extending between the self-supporting layer and the polarising film and a second hollow portion extending between the polarising film and said optically worked and polished side of said mould wall;
b2) introducing into said first and second hollow portions of said at least one moulding cavity a polymerisable material in liquid phase including:
- a first polyisocyanate or polyol-allyl-carbonate prepolymer and/or a first isocyanate or allyl-carbonate monomer including reactive functional groups,
- a reactive component including functional groups capable of chemically reacting with the reactive functional groups of the first prepolymer and/or of the first monomer,
wherein said functional groups of the first prepolymer and/or the first monomer are selected from NCO or -CH=CH₂,
wherein said first polyisocyanate prepolymer has a content of NCO isocyanate reactive functional groups comprised between 5 and 50% by weight, an average functionality comprised between 2 and 3, a viscosity lower than 5,000 mPa.s at 70°C, and
wherein said first polyol-allyl-carbonate prepolymer has an average functionality comprised between 1 and 2, a viscosity of 5-60 mPa.s at 25°C.

7. Method according to claim 6, wherein said polymerisable material in liquid phase further includes at least one chemical compound adapted to modify the spectral characteristics of the transmitted light.

8. Method according to claim 3, further comprising embedding a polarising film within said first self-supporting layer made of partially cross-linked thermosetting plastic material, wherein said step a) is carried out by means of the steps of:
a1) providing a first mould comprising:
- a first mould wall,
- a second mould wall defining with the first mould wall at least one moulding cavity,
- a gasket laterally sealing said at least one moulding cavity and adapted to support a polarising film and maintain the same in a suspended condition,
a2) associating to said gasket a polarising film adapted for being supported and maintained in a suspended condition by the aforementioned gasket so as to define within said at least one moulding cavity a first hollow portion extending between the first mould wall and the polarising film and a second hollow portion extending between the polarising film and the second mould wall;
a3) introducing into said first and second hollow portions of said at least one moulding cavity a polymerisable material in liquid phase according to step a1);
a4) partially cross-linking the layer thus formed so as to obtain a self-supporting layer made of partially cross-linked thermosetting plastic material including reactive functional groups and a polarising film; and
a5) inserting the first self-supporting layer thus obtained into a second mould.

9. Method according to claim 8, wherein said polymerisable material in liquid phase further includes at least one chemical compound adapted to modify the spectral characteristics of the transmitted light.

10. Method according to claim 8, further comprising the step of
a6) introducing into at least one portion of the self-supporting layer made of partially cross-linked thermosetting plastic material thus obtained at least one chemical compound adapted to modify the spectral characteristics of the transmitted light.

11. Method according to claim 2, wherein said step d) is carried out by means of the steps of:
d1) introducing into a mould cavity a layer of a polymerisable material in liquid phase including:
- a first polyisocyanate or polyol-allyl-carbonate prepolymer and/or a first isocyanate or allyl-carbonate monomer including reactive functional groups,
- a reactive component including functional groups capable of chemically reacting with the reactive functional groups of the first prepolymer and/or of the first monomer,
wherein said functional groups of the first prepolymer and/or the first monomer are selected from NCO or -CH=CH₂,
wherein said first polyisocyanate prepolymer has a content of NCO isocyanate reactive functional groups comprised between 5 and 50% by weight, an average functionality comprised between 2 and 3, a viscosity lower than 5,000 mPa.s at 70°C, and
wherein said first polyol-allyl-carbonate prepolymer has an average functionality comprised between 1 and 2, a viscosity of 5-60 mPa.s at 25°C;
d2) partially cross-linking the layer thus formed so as to obtain a self-supporting layer made of partially cross-linked thermosetting plastic material including reactive functional groups;
d3) introducing into at least one portion of the self-supporting layer made of partially cross-linked thermosetting plastic material thus obtained said at least one chemical compound adapted to modify the spectral characteristics of the transmitted light.

12. Method according to claim 2, wherein said step d) is carried out by means of the steps of:
d4) introducing into a mould cavity a layer of a polymerisable material in liquid phase including:
- a first polyisocyanate or polyol-allyl-carbonate prepolymer and/or a first isocyanate or allyl-carbonate monomer including reactive functional groups,
- a reactive component including functional groups capable of chemically reacting with the reactive functional groups of the first prepolymer and/or of the first monomer,
wherein said functional groups of the first prepolymer and/or the first monomer are selected from NCO or -CH=CH₂,
wherein said first polyisocyanate prepolymer has a content of NCO isocyanate reactive functional groups comprised between 5 and 50% by weight, an average functionality comprised between 2 and 3, a viscosity lower than 5,000 mPa.s at 70°C, and
wherein said first polyol-allyl-carbonate prepolymer has an average functionality comprised between 1 and 2, a viscosity of 5-60 mPa.s at 25°C;
and said at least one chemical compound adapted to modify the spectral characteristics of the transmitted light,
d5) partially cross-linking the layer thus formed so as to obtain a self-supporting layer made of partially cross-linked thermosetting plastic material including reactive functional groups and at least one chemical compound adapted to modify the spectral characteristics of the transmitted light in at least one portion thereof.

13. Method according to claim 2, further comprises the step of incorporating a polarising layer within said first self-supporting layer or said second layer.

14. Method according to claim 2, further comprises the step of associating a polarising layer to at least a surface of said monolithic optical element made of thermosetting plastic material.

15. Method according to claim 2, further comprising embedding a polarising film within said first self-supporting layer made of partially cross-linked thermosetting plastic material, wherein said step d) is carried out by means of the steps of:
d1) providing a first mould comprising:
- a first mould wall optically worked and polished on at least one side,
- a second mould wall optically worked and polished on at least one side and defining with the first mould wall at least one moulding cavity,
- a gasket laterally sealing said at least one moulding cavity and adapted to support a polarising film and maintain the same in a suspended condition,
d2) associating to said gasket a polarising film adapted for being supported and maintained in a suspended condition by the aforementioned gasket so as to define within said at least one moulding cavity a first hollow portion extending between the first mould wall and the polarising film and a second hollow portion extending between the polarising film and the second mould wall;
d3) introducing into said first and second hollow portions of said at least one moulding cavity a polymerisable material in liquid phase including:
- a first polyisocyanate or polyol-allyl-carbonate prepolymer and/or a first isocyanate or allyl-carbonate monomer including reactive functional groups,
- a reactive component including functional groups capable of chemically reacting with the reactive functional groups of the first prepolymer and/or of the first monomer,
wherein said functional groups of the first prepolymer and/or the first monomer are selected from NCO or -CH=CH₂,
wherein said first polyisocyanate prepolymer has a content of NCO isocyanate reactive functional groups comprised between 5 and 50% by weight, an average functionality comprised between 2 and 3, a viscosity lower than 5,000 mPa.s at 70°C, and
wherein said first polyol-allyl-carbonate prepolymer has an average functionality comprised between 1 and 2, a viscosity of 5-60 mPa.s at 25°C;
d4) partially cross-linking the layer thus formed so as to obtain a self-supporting layer made of partially cross-linked thermosetting plastic material including reactive functional groups and a polarising film;
d5) introducing into at least one portion of the self-supporting layer made of partially cross-linked thermosetting plastic material thus obtained said at least one chemical compound adapted to modify the spectral characteristics of the transmitted light; and
d6) inserting the first self-supporting layer thus obtained into a second mould.

16. Method according to claim 2, further comprising embedding a polarising film within said first self-supporting layer made of partially cross-linked thermosetting plastic material, wherein said step d) is carried out by means of the steps of:
d1) providing a first mould comprising:
- a first mould wall optically worked and polished on at least one side,
- a second mould wall optically worked and polished on at least one side and defining with the first mould wall at least one moulding cavity,
- a gasket laterally sealing said at least one moulding cavity and adapted to support a polarising film and maintain the same in a suspended condition,
d2) associating to said gasket a polarising film adapted for being supported and maintained in a suspended condition by the aforementioned gasket so as to define within said at least one moulding cavity a first hollow portion extending between the first mould wall and the polarising film and a second hollow portion extending between the polarising film and the second mould wall;
d3) introducing into said first and second hollow portions of said at least one moulding cavity a polymerisable material in liquid phase , including:
- a first polyisocyanate or polyol-allyl-carbonate prepolymer and/or a first isocyanate or allyl-carbonate monomer including reactive functional groups,
- a reactive component including functional groups capable of chemically reacting with the reactive functional groups of the first prepolymer and/or of the first monomer,
wherein said functional groups of the first prepolymer and/or the first monomer are selected from -NCO or -CH=CH₂,
wherein said first polyisocyanate prepolymer has a content of NCO isocyanate reactive functional groups comprised between 5 and 50% by weight, an average functionality comprised between 2 and 3, a viscosity lower than 5,000 mPa.s at 70°C, and
wherein said first polyol-allyl-carbonate prepolymer has an average functionality comprised between 1 and 2, a viscosity of 5-60 mPa.s at 25°C;
and
- at least one chemical compound adapted to modify the spectral characteristics of the transmitted light;
d4) partially cross-linking the layer thus formed so as to obtain a self-supporting layer made of partially cross-linked thermosetting plastic material including reactive functional groups, at least one chemical compound adapted to modify the spectral characteristics of the transmitted light in at least one portion thereof and a polarizing film;
d5) inserting the first self-supporting layer thus obtained into a second mould.

17. Method according to claim 4 or 14, wherein said polarising layer is a polarising coating.

18. Method according to claim 1 or 2, further comprising the step of cooling the self-supporting layer made of partially cross-linked thermosetting plastic material provided in the mould, said cooling step being preferably carried out so as to reduce the temperature of the layer to a value comprised between 25°C and 80°C.

19. Method according to claim 18, further comprising the step of heating the self-supporting layer made of partially cross-linked thermosetting plastic material and the mould to a temperature comprised between 30°C and 110°C before carrying out the step of forming said second layer on at least one surface of the first self-supporting layer.

20. Method according to claim 1, wherein said step b) is carried but by casting said polymerisable material in liquid phase into at least one cavity defined in the mould between said at least one surface of the self-supporting layer and an inner surface of the mould.

21. Method according to claim 1 or 2, wherein said reactive component comprises:
- at least a second prepolymer preferably selected from the group comprising prepolymers including functional groups reactive with the -NCO isocyanate groups and prepolymers including functional groups reactive with the -CH=CH₂ groups, and/or
- at least a second monomer preferably selected from the group comprising: monomers including functional groups reactive with the NCO isocyanate groups and monomers including functional groups reactive with the -CH=CH₂ groups, and/or
- at least one cross-linking agent preferably selected from the group comprising: cross-linking agents including functional groups reactive with the NCO isocyanate groups and cross-linking agents including functional groups reactive with the -CH=CH₂ groups, and/or
- at least one polymerisation catalyst of the first prepolymer and/or of the first monomer preferably selected from the group comprising: catalysts including functional groups reactive with the -NCO isocyanate groups and catalysts including functional groups reactive with the -CH=CH₂ groups,
in liquid or solid phase.

22. Method according to claim 1, 2 or 21, wherein said reactive component includes functional groups capable of chemically reacting with the reactive functional groups of the self suppouing layer made of partially cross-linked thermosetting plastic material.

23. Method according to any one of claims 1-22, wherein said at least one chemical compound adapted to modify the spectral characteristics of the transmitted light is selected from dyeing compounds adapted to filter the visible light preferably comprising azobenzene chromophore groups, anthraquinone chromophore groups, and mixtures thereof, photochromatic compounds preferably selected from the group comprising spiropyrans, spirooxazines, fulgides, and mixtures thereof, and mixtures thereof.

24. Polarising or non polarising optical element made of thermosetting plastic material obtainable by the method according to any one of claims 1-23.

25. Eye-protecting device comprising an optical element according to claim 24.

## Patentansprüche

1. Verfahren zur Herstellung eines optischen Elements, das aus einem duroplastischen Kunststoffmaterial besteht und mindestens eine funktionalisierte Schicht umfasst, die mindestens eine chemische Verbindung enthält, die geeignet ist, die spektralen Eigenschaften von Durchlicht zu verändern, das die folgenden Schritte umfasst:
a) Bereitstellen in einer Form einer aus teilvernetztem duroplastischem Kunststoffmaterial bestehenden ersten selbsttragenden Schicht, die ein teilvernetztes Polyurethan oder Polyol(allylcarbonat)-Polymer umfasst, das reaktive funktionelle Gruppen umfasst, die aus -NCO oder -CH=CH₂ ausgewählt sind;
b) Ausbilden auf mindestens einer Oberfläche der selbsttragenden Schicht einer zweiten Schicht, die Folgendes umfasst:
i) ein polymerisierbares Material in flüssiger Phase, das Folgendes umfasst:
- ein erstes Polyisocyanat- oder Polyol(allylcarbonat)-Prepolymer und/oder ein erstes Isocyanat- oder Allylcarbonat-Monomer, umfassend reaktive funktionelle Gruppen, die mit den reaktiven funktionellen Gruppen der aus teilvernetztem duroplastischen Kunststoffmaterial bestehenden selbsttragenden Schicht chemisch reagieren können,
und
- eine reaktive Komponente, die funktionelle Gruppen umfasst, die mit den reaktiven funktionellen Gruppen des ersten Prepolymers und/oder des ersten Monomers chemisch reagieren können,
wobei diese funktionellen Gruppen des ersten Prepolymers und/oder des ersten Monomers aus -NCO oder -CH=CH₂ ausgewählt sind,
wobei das erste Polyisocyanat-Prepolymer einen Gehalt an reaktiven funktionellen Isocyanatgruppen -NCO zwischen 5 und 50 Gew.-%, eine mittlere Funktionalität zwischen 2 und 3 und eine Viskosität unter 5.000 mPa·s bei 70°C aufweist,
wobei das erste Polyol(allylcarbonat)-Prepolymer eine mittlere Funktionalität zwischen 1 und 2 und eine Viskosität von 5 bis 60 mPa·s bei 25°C aufweist,
ii) mindestens eine chemische Verbindung, die geeignet ist, die spektralen Eigenschaften des Durchlichts zu verändern,
c) Vernetzen der ersten und der zweiten Schicht in der Form, um ein aus duroplastischem Kunststoffmaterial bestehendes festes monolithisches optisches Element auszubilden, das mindestens eine funktionalisierte Schicht umfasst, die mindestens eine chemische Verbindung enthält, die geeignet ist, die spektralen Eigenschaften des Durchlichts zu verändern.

2. Verfahren zur Herstellung eines optischen Elements, das aus einem duroplastischen Kunststoffmaterial besteht und mindestens eine funktionalisierte Schicht umfasst, die mindestens eine chemische Verbindung enthält, die geeignet ist, die spektralen Eigenschaften von Durchlicht zu verändern, das die folgenden Schritte umfasst:
d) Bereitstellen in einer Form einer aus teilvernetztem duroplastischem Kunststoffmaterial bestehenden ersten selbsttragenden Schicht, die ein teilvernetztes Polyurethan- oder Polyol(allylcarbonat)- Polymer, das reaktive funktionelle Gruppen umfasst, die aus -NCO oder -CH=CH₂ ausgewählt sind, und mindestens eine chemische Verbindung umfasst, die geeignet ist, die spektralen Eigenschaften des Durchlichts der selbsttragenden Schicht zu verändern;
e) Ausbilden auf mindestens einer Oberfläche der selbsttragenden Schicht einer zweiten Schicht, die Folgendes umfasst:
i) ein polymerisierbares Material in flüssiger Phase, das Folgendes umfasst:
- ein erstes Polyisocyanat- oder Polyol(allylcarbonat)-Prepolymer und/oder ein erstes Isocyanat- oder Allylcarbonat-Monomer, umfassend reaktive funktionelle Gruppen, die mit den reaktiven funktionellen Gruppen der aus teilvernetztem duroplastischen Kunststoffmaterial bestehenden selbsttragenden Schicht chemisch reagieren können,
- eine reaktive Komponente, die funktionelle Gruppen umfasst, die mit den reaktiven funktionellen Gruppen des ersten Prepolymers und/oder des ersten Monomers chemisch reagieren können,
wobei diese funktionellen Gruppen des ersten Prepolymers und/oder des ersten Monomers aus -NCO oder -CH=CH₂ ausgewählt sind,
wobei das erste Polyisocyanat-Prepolymer einen Gehalt an reaktiven funktionellen Isocyanatgruppen -NCO zwischen 5 und 50 Gew.-%, eine mittlere Funktionalität zwischen 2 und 3 und eine Viskosität unter 5.000 mPa·s bei 70°C aufweist,
wobei das erste Polyol(allylcarbonat)-Prepolymer eine mittlere Funktionalität zwischen 1 und 2 und eine Viskosität von 5 bis 60 mPa·s bei 25°C aufweist,
f) Vernetzen der ersten und der zweiten Schicht in der Form, um ein aus duroplastischem Kunststoffmaterial bestehendes festes monolithisches optisches Element auszubilden, das mindestens eine funktionalisierte Schicht umfasst, die mindestens eine chemische Verbindung enthält, die geeignet ist, die spektralen Eigenschaften des Durchlichts zu verändern.

3. Verfahren nach Anspruch 1, wobei der Schritt a) mittels der folgenden Schritte ausgeführt wird:
a1) Einbringen in einen Formhohlraum einer Schicht aus einem polymerisierbaren Material in flüssiger Phase, umfassend:
- ein erstes Polyisocyanat- oder Polyol(allylcarbonat)-Prepolymer und/oder ein erstes Isocyanat- oder Allylcarbonat-Monomer, umfassend reaktive funktionelle Gruppen,
- eine reaktive Komponente, die funktionelle Gruppen umfasst, die mit den reaktiven funktionellen Gruppen des ersten Prepolymers und/oder des ersten Monomers chemisch reagieren können,
wobei diese funktionellen Gruppen des ersten Prepolymers und/oder des ersten Monomers aus -NCO oder -CH=CH₂ ausgewählt sind,
wobei das erste Polyisocyanat-Prepolymer einen Gehalt an reaktiven funktionellen Isocyanatgruppen -NCO zwischen 5 und 50 Gew.-%, eine mittlere Funktionalität zwischen 2 und 3 und eine Viskosität unter 5.000 mPa·s bei 70°C aufweist, und wobei das erste Polyol(allylcarbonat)-Prepolymer eine mittlere Funktionalität zwischen 1 und 2 und eine Viskosität von 5 bis 60 mPa·s bei 25°C aufweist,
a2) Teilvernetzen der derart ausgebildeten Schicht, um eine aus teilvernetztem duroplastischem Kunststoff bestehende selbsttragende Schicht zu erhalten, die reaktive funktionelle Gruppen umfasst.

4. Verfahren nach Anspruch 1, das ferner den Schritt des Verbindens einer polarisierenden Schicht mit mindestens einer Oberfläche des aus duroplastischem Kunststoffmaterial bestehenden monolithischen optischen Elements umfasst.

5. Verfahren nach Anspruch 1, das ferner den Schritt des Einbauens einer polarisierenden Schicht in die erste selbsttragende Schicht oder die zweite Schicht umfasst.

6. Verfahren nach Anspruch 5, wobei die polarisierende Schicht eine Polarisationsfolie ist, wobei die Form Folgendes umfasst:
- die mit Schritt a) erhaltene selbsttragende Schicht,
- eine Formwand, die auf mindestens einer Seite optisch bearbeitet und poliert ist und mit der selbsttragenden Schicht mindestens einen Formhohlraum definiert,
- eine Dichtung, die den mindestens einen Formhohlraum seitlich abdichtet und geeignet ist, eine Polarisationsfolie zu tragen und diese in einem hängenden Zustand zu halten, und
wobei Schritt b) mittels der folgenden Schritte ausgeführt wird:
b1) Verbinden mit der Dichtung einer Polarisationsfolie, die geeignet ist, von der vorgenannten Dichtung getragen und in einem hängenden Zustand gehalten zu werden, um in dem mindestens einen Formhohlraum einen ersten hohlen Bereich, der sich zwischen der selbsttragenden Schicht und der Polarisationsfolie erstreckt, und einen zweiten hohlen Bereich zu definieren, der sich zwischen der Polarisationsfolie und der optisch bearbeiteten und polierten Seite der Formwand erstreckt;
b2) Einbringen in den ersten und den zweiten hohlen Bereich des mindestens einen Formhohlraums eines polymerisierbaren Materials in flüssiger Phase, das Folgendes umfasst:
- ein erstes Polyisocyanat- oder Polyol(allylcarbonat)-Prepolymer und/oder ein erstes Isocyanat- oder Allylcarbonat-Monomer, umfassend reaktive funktionelle Gruppen,
- eine reaktive Komponente, die funktionelle Gruppen umfasst, die mit den reaktiven funktionellen Gruppen des ersten Prepolymers und/oder des ersten Monomers chemisch reagieren können,
wobei diese funktionellen Gruppen des ersten Prepolymers und/oder des ersten Monomers aus -NCO oder -CH=CH₂ ausgewählt sind,
wobei das erste Polyisocyanat-Prepolymer einen Gehalt an reaktiven funktionellen Isocyanatgruppen -NCO zwischen 5 und 50 Gew.-%, eine mittlere Funktionalität zwischen 2 und 3 und eine Viskosität unter 5.000 mPa·s bei 70°C aufweist, und wobei das erste Polyol(allylcarbonat)-Prepolymer eine mittlere Funktionalität zwischen 1 und 2 und eine Viskosität von 5 bis 60 mPa·s bei 25°C aufweist.

7. Verfahren nach Anspruch 6, wobei das polymerisierbare Material in flüssiger Phase ferner mindestens eine chemische Verbindung umfasst, die geeignet ist, die spektralen Eigenschaften des Durchlichts zu verändern.

8. Verfahren nach Anspruch 3, das ferner das Einbetten einer Polarisationsfolie in die aus teilvernetztem duroplastischem Kunststoff bestehende erste selbsttragende Schicht umfasst, wobei Schritt a) mittels der folgenden Schritte ausgeführt wird:
a1) Bereitstellen einer ersten Form, die Folgendes umfasst:
- eine erste Formwand,
- eine zweite Formwand, die mit der ersten Formwand mindestens einen Formhohlraum definiert,
- eine Dichtung, die den mindestens einen Formhohlraum seitlich abdichtet und geeignet ist, eine Polarisationsfolie zu tragen und diese in einem hängenden Zustand zu halten,
a2) Verbinden mit der Dichtung einer Polarisationsfolie, die geeignet ist, von der vorgenannten Dichtung getragen und in einem hängenden Zustand gehalten zu werden, um in dem mindestens einen Formhohlraum einen ersten hohlen Bereich, der sich zwischen der ersten Formwand und der Polarisationsfolie erstreckt, und einen zweiten hohlen Bereich zu definieren, der sich zwischen der Polarisationsfolie und der zweiten Formwand erstreckt;
a3) Einbringen in den ersten und den zweiten hohlen Bereich des mindestens einen Formhohlraums eines polymerisierbaren Materials in flüssiger Phase gemäß Schritt a1);
a4) Teilvernetzen der derart ausgebildeten Schicht, um eine aus teilvernetztem duroplastischem Kunststoff bestehende selbsttragende Schicht zu erhalten, die reaktive funktionelle Gruppen und eine Polarisationsfolie umfasst; und
a5) Eingeben der derart erhaltenen selbsttragenden Schicht in eine zweite Form.

9. Verfahren nach Anspruch 8, wobei das polymerisierbare Material in flüssiger Phase ferner mindestens eine chemische Verbindung umfasst, die geeignet ist, die spektralen Eigenschaften des Durchlichts zu verändern.

10. Verfahren nach Anspruch 8, das ferner den folgenden Schritt umfasst:
a6) Einbringen in mindestens einen Abschnitt der derart erhaltenen aus teilvernetztem duroplastischem Kunststoff bestehenden selbsttragenden Schicht von mindestens einer chemischen Verbindung, die geeignet ist, die spektralen Eigenschaften des Durchlichts zu verändern.

11. Verfahren nach Anspruch 2, wobei der Schritt d) mittels der folgenden Schritte ausgeführt wird:
d1) Einbringen in einen Formhohlraum einer Schicht aus einem polymerisierbaren Material in flüssiger Phase, umfassend:
- ein erstes Polyisocyanat- oder Polyol(allylcarbonat)-Prepolymer und/oder ein erstes Isocyanat- oder Allylcarbonat-Monomer, umfassend reaktive funktionelle Gruppen,
- eine reaktive Komponente, die funktionelle Gruppen umfasst, die mit den reaktiven funktionellen Gruppen des ersten Prepolymers und/oder des ersten Monomers chemisch reagieren können,
wobei diese funktionellen Gruppen des ersten Prepolymers und/oder des ersten Monomers aus -NCO oder -CH=CH₂ ausgewählt sind,
wobei das erste Polyisocyanat-Prepolymer einen Gehalt an reaktiven funktionellen Isocyanatgruppen -NCO zwischen 5 und 50 Gew.-%, eine mittlere Funktionalität zwischen 2 und 3 und eine Viskosität unter 5.000 mPa·s bei 70°C aufweist, und wobei das erste Polyol(allylcarbonat)-Prepolymer eine mittlere Funktionalität zwischen 1 und 2 und eine Viskosität von 5 bis 60 mPa·s bei 25°C aufweist;
d2) Teilvernetzen der derart ausgebildeten Schicht, um eine aus teilvernetztem duroplastischem Kunststoff bestehende selbsttragende Schicht zu erhalten, die reaktive funktionelle Gruppen umfasst;
d3) Einbringen in mindestens einen Abschnitt der derart erhaltenen aus teilvernetztem duroplastischem Kunststoff bestehenden selbsttragenden Schicht der mindestens einen chemischen Verbindung, die geeignet ist, die spektralen Eigenschaften des Durchlichts zu verändern.

12. Verfahren nach Anspruch 2, wobei der Schritt d) mittels der folgenden Schritte ausgeführt wird:
d4) Einbringen in einen Formhohlraum einer Schicht aus einem polymerisierbaren Material in flüssiger Phase, umfassend:
- ein erstes Polyisocyanat- oder Polyol(allylcarbonat)-Prepolymer und/oder ein erstes Isocyanat- oder Allylcarbonat-Monomer, umfassend reaktive funktionelle Gruppen,
- eine reaktive Komponente, die funktionelle Gruppen umfasst, die mit den reaktiven funktionellen Gruppen des ersten Prepolymers und/oder des ersten Monomers chemisch reagieren können,
wobei diese funktionellen Gruppen des ersten Prepolymers und/oder des ersten Monomers aus -NCO oder -CH=CH₂ ausgewählt sind,
wobei das erste Polyisocyanat-Prepolymer einen Gehalt an reaktiven funktionellen Isocyanatgruppen -NCO zwischen 5 und 50 Gew.-%, eine mittlere Funktionalität zwischen 2 und 3 und eine Viskosität unter 5.000 mPa·s bei 70°C aufweist, und wobei das erste Polyol(allylcarbonat)-Prepolymer eine mittlere Funktionalität zwischen 1 und 2 und eine Viskosität von 5 bis 60 mPa·s bei 25°C aufweist;
und der mindestens einen chemischen Verbindung, die geeignet ist, die spektralen Eigenschaften des Durchlichts zu verändern,
d5) Teilvernetzen der derart erhaltenen Schicht, um eine aus teilvernetztem duroplastischem Kunststoff bestehende selbsttragende Schicht zu erhalten, die reaktive funktionelle Gruppen und mindestens eine chemische Verbindung, die geeignet ist, die spektralen Eigenschaften des Durchlichts zu verändern, in mindestens einem ihrem Abschnitt umfasst.

13. Verfahren nach Anspruch 2, das ferner den Schritt des Einbauens einer polarisierenden Schicht in die erste selbsttragende Schicht oder die zweite Schicht umfasst.

14. Verfahren nach Anspruch 2, das ferner den Schritt des Verbindens einer polarisierenden Schicht mit mindestens einer Oberfläche des aus duroplastischem Kunststoffmaterial bestehenden monolithischen optischen Elements umfasst.

15. Verfahren nach Anspruch 2, das ferner das Einbetten einer Polarisationsfolie in die aus teilvernetztem duroplastischem Kunststoff bestehende erste selbsttragende Schicht umfasst, wobei Schritt d) mittels der folgenden Schritte ausgeführt wird:
d1 Bereitstellen einer ersten Form, die Folgendes umfasst:
- eine auf mindestens einer Seite optisch bearbeitete und polierte erste Formwand,
- eine zweite Formwand, die auf mindestens einer Seite optisch bearbeitet und poliert ist und mit der ersten Formwand mindestens einen Formhohlraum definiert,
- eine Dichtung, die den mindestens einen Formhohlraum seitlich abdichtet und geeignet ist, eine Polarisationsfolie zu tragen und diese in einem hängenden Zustand zu halten,
d2) Verbinden mit der Dichtung einer Polarisationsfolie, die geeignet ist, von der vorgenannten Dichtung getragen und in einem hängenden Zustand gehalten zu werden, um in dem mindestens einen Formhohlraum einen ersten hohlen Bereich, der sich zwischen der ersten Formwand und der Polarisationsfolie erstreckt, und einen zweiten hohlen Bereich zu definieren, der sich zwischen der Polarisationsfolie und der zweiten Formwand erstreckt;
d3) Einbringen in den ersten und den zweiten hohlen Bereich des mindestens einen Formhohlraums eines polymerisierbaren Materials in flüssiger Phase, das Folgendes umfasst:
- ein erstes Polyisocyanat- oder Polyol(allylcarbonat)-Prepolymer und/oder ein erstes Isocyanat- oder Allylcarbonat-Monomer, umfassend reaktive funktionelle Gruppen,
- eine reaktive Komponente, die funktionelle Gruppen umfasst, die mit den reaktiven funktionellen Gruppen des ersten Prepolymers und/oder des ersten Monomers chemisch reagieren können,
wobei diese funktionellen Gruppen des ersten Prepolymers und/oder des ersten Monomers aus -NCO oder -CH=CH₂ ausgewählt sind,
wobei das erste Polyisocyanat-Prepolymer einen Gehalt an reaktiven funktionellen Isocyanatgruppen -NCO zwischen 5 und 50 Gew.-%, eine mittlere Funktionalität zwischen 2 und 3 und eine Viskosität unter 5.000 mPa·s bei 70°C aufweist, und wobei das erste Polyol(allylcarbonat)-Prepolymer eine mittlere Funktionalität zwischen 1 und 2 und eine Viskosität von 5 bis 60 mPa·s bei 25°C aufweist;
d4) Teilvernetzen der derart ausgebildeten Schicht, um eine aus teilvernetztem duroplastischem Kunststoff bestehende selbsttragende Schicht zu erhalten, die reaktive funktionelle Gruppen und eine Polarisationsfolie umfasst;
d5) Einbringen in mindestens einen Abschnitt der derart erhaltenen aus teilvernetztem duroplastischem Kunststoff bestehenden selbsttragenden Schicht der mindestens einen chemischen Verbindung, die geeignet ist, die spektralen Eigenschaften des Durchlichts zu verändern; und
d6) Eingeben der derart erhaltenen selbsttragenden Schicht in eine zweite Form.

16. Verfahren nach Anspruch 2, das ferner das Einbetten einer Polarisationsfolie in die aus teilvernetztem duroplastischem Kunststoff bestehende erste selbsttragende Schicht umfasst, wobei Schritt d) mittels der folgenden Schritte ausgeführt wird:
d1) Bereitstellen einer ersten Form, die Folgendes umfasst:
- eine auf mindestens einer Seite optisch bearbeitete und polierte erste Formwand,
- eine zweite Formwand, die auf mindestens einer Seite optisch bearbeitet und poliert ist und mit der ersten Formwand mindestens einen Formhohlraum definiert,
- eine Dichtung, die den mindestens einen Formhohlraum seitlich abdichtet und geeignet ist, eine Polarisationsfolie zu tragen und diese in einem hängenden Zustand zu halten,
d2) Verbinden mit der Dichtung einer Polarisationsfolie, die geeignet ist, von der vorgenannten Dichtung getragen und in einem hängenden Zustand gehalten zu werden, um in dem mindestens einen Formhohlraum einen ersten hohlen Bereich, der sich zwischen der ersten Formwand und der Polarisationsfolie erstreckt, und einen zweiten hohlen Bereich zu definieren, der sich zwischen der Polarisationsfolie und der zweiten Formwand erstreckt;
d3) Einbringen in den ersten und den zweiten hohlen Bereich des mindestens einen Formhohlraums eines polymerisierbaren Materials in flüssiger Phase, das Folgendes umfasst:
- ein erstes Polyisocyanat- oder Polyol(allylcarbonat)-Prepolymer und/oder ein erstes Isocyanat- oder Allylcarbonat-Monomer, umfassend reaktive funktionelle Gruppen,
- eine reaktive Komponente, die funktionelle Gruppen umfasst, die mit den reaktiven funktionellen Gruppen des ersten Prepolymers und/oder des ersten Monomers chemisch reagieren können,
wobei diese funktionellen Gruppen des ersten Prepolymers und/oder des ersten Monomers aus -NCO oder -CH=CH₂ ausgewählt sind,
wobei das erste Polyisocyanat-Prepolymer einen Gehalt an reaktiven funktionellen Isocyanatgruppen -NCO zwischen 5 und 50 Gew.-%, eine mittlere Funktionalität zwischen 2 und 3 und eine Viskosität unter 5.000 mPa·s bei 70°C aufweist, und wobei das erste Polyol(allylcarbonat)-Prepolymer eine mittlere Funktionalität zwischen 1 und 2 und eine Viskosität von 5 bis 60 mPa·s bei 25°C aufweist;
und
- mindestens eine chemische Verbindung, die geeignet ist, die spektralen Eigenschaften des Durchlichts zu verändern;
d4) Teilvernetzen der derart erhaltenen Schicht, um eine aus teilvernetztem duroplastischem Kunststoff bestehende selbsttragende Schicht zu erhalten, die reaktive funktionelle Gruppen, mindestens eine chemische Verbindung, die geeignet ist, die spektralen Eigenschaften des Durchlichts zu verändern, in mindestens einem ihrem Abschnitt und eine Polarisationsfolie umfasst;
d5) Eingeben der derart erhaltenen selbsttragenden Schicht in eine zweite Form.

17. Verfahren nach Anspruch 4 oder 14, wobei die polarisierende Schicht eine polarisierende Beschichtung ist.

18. Verfahren nach Anspruch 1 oder 2, das ferner den Schritt des Kühlens der in der Form bereitgestellten aus teilvernetztem duroplastischem Kunststoff bestehenden selbsttragenden Schicht umfasst, wobei der Kühlschritt vorzugsweise derart ausgeführt wird, dass die Temperatur der Schicht auf einen Wert zwischen 25°C und 80°C gesenkt wird.

19. Verfahren nach Anspruch 18, das ferner den Schritt des Erwärmens der aus teilvernetztem duroplastischem Kunststoff bestehenden selbsttragenden Schicht und der Form auf eine Temperatur zwischen 30°C und 110°C vor Ausführung des Schritts des Ausbildens der zweiten Schicht auf mindestens einer Oberfläche der ersten selbsttragenden Schicht umfasst.

20. Verfahren nach Anspruch 1, wobei der Schritt b) durch Gießen des polymerisierbaren Materials in flüssiger Phase in mindestens einen Hohlraum ausgeführt wird, der in der Form zwischen der mindestens einen Oberfläche der selbsttragenden Schicht und einer Innenfläche der Form definiert ist.

21. Verfahren nach Anspruch 1 oder 2, wobei die reaktive Komponente Folgendes umfasst:
- mindestens ein zweites Prepolymer, das vorzugsweise aus der Gruppe ausgewählt ist, die Prepolymere, die mit den -NCO Isocyanat-Gruppen reaktive funktionelle Gruppen umfassen, und Prepolymere umfasst, die mit den -CH=CH₂ Gruppen reaktive funktionelle Gruppen umfassen, und/oder
- mindestens ein zweites Monomer, das vorzugsweise aus der Gruppe ausgewählt ist, die Folgendes umfasst: Monomere, die mit den -NCO Isocyanat-Gruppen reaktive funktionelle Gruppen umfassen, und Monomere, die mit den -CH=CH₂ Gruppen reaktive funktionelle Gruppen umfassen, und/oder
- mindestens ein Vernetzungsmittel, das vorzugsweise aus der Gruppe ausgewählt ist, die Folgendes umfasst: Vernetzungsmittel, die mit den -NCO Isocyanat-Gruppen reaktive funktionelle Gruppen umfassen, und Vernetzungsmittel, die mit den -CH=CH₂ Gruppen reaktive funktionelle Gruppen umfassen, und/oder
- mindestens einen Polymerisationskatalysator für das erste Prepolymer und/oder das erste Monomer, der vorzugsweise aus der Gruppe ausgewählt ist, die Folgendes umfasst: Katalysatoren, die mit den -NCO Isocyanat-Gruppen reaktive funktionelle Gruppen umfassen, und Katalysatoren, die mit den -CH=CH₂ Gruppen reaktive funktionelle Gruppen umfassen,
in flüssiger oder fester Phase.

22. Verfahren nach Anspruch 1, 2 oder 21, wobei die reaktive Komponente funktionelle Gruppen umfasst, die mit den reaktiven funktionellen Gruppen der aus teilvernetztem duroplastischem Kunststoff bestehenden selbsttragenden Schicht chemisch reagieren können.

23. Verfahren nach einem der Ansprüche von 1 bis 22, wobei die mindestens eine chemische Verbindung, die geeignet ist, die spektralen Eigenschaften des Durchlichts zu verändern, aus zum Filtern des sichtbaren Lichts geeigneten färbenden Verbindungen, die vorzugsweise Azobenzol-Chromophor-Gruppen, Anthrachinon-Chromophor-Gruppen und Mischungen davon umfassen, photochromatischen Verbindungen, die vorzugsweise aus der Gruppe ausgewählt sind, die Spiropyrane, Spirooxazine, Fulgide und Mischungen davon umfasst, und Mischungen davon ausgewählt ist.

24. Polarisierendes oder nichtpolarisierendes optisches Element, das aus einem duroplastischen Kunststoffmaterial besteht, das mit dem Verfahren nach einem der Ansprüche von 1 bis 23 erhalten werden kann.

25. Augenschutzvorrichtung, die ein optisches Element nach Anspruch 24 umfasst.

## Revendications

1. Procédé de fabrication d'un élément optique constitué de matière plastique thermodurcissable et comprenant au moins une couche fonctionnalisée incorporant au moins un composé chimique adapté pour modifier les caractéristiques spectrales d'une lumière transmise, comprenant les étapes suivantes :
a) la disposition dans un moule d'une première couche autoporteuse constituée de matière plastique thermodurcissable partiellement réticulée comprenant un polymère polyuréthane ou polyol-alkyl-carbonate partiellement réticulé comprenant des groupes fonctionnels réactifs sélectionnés à partir de -NCO ou -CH=CH₂ ;
b) la formation sur au moins une surface de ladite couche autoporteuse d'une deuxième couche comprenant :
i) une matière polymérisable en phase liquide comprenant :
- un premier prépolymère polyisocyanate ou polyol-alkyl-carbonate et/ou un premier monomère isocyanate ou alkyl-carbonate comprenant des groupes fonctionnels capables de réagir du point de vue chimique avec les groupes fonctionnels réactifs de la couche autoporteuse constituée de matière plastique thermodurcissable partiellement réticulée, et
- un composant réactif comprenant des groupes fonctionnels capables de réagir du point de vue chimique avec les groupes fonctionnels réactifs du premier prépolymère et/ou du premier monomère,
dans lequel lesdits groupes fonctionnels réactifs du premier prépolymère et/ou du premier monomère sont sélectionnés à partir de -NCO ou -CH=CH₂,
dans lequel ledit premier prépolymère polyisocyanate a une teneur en groupes fonctionnels réactifs isocyanate -NCO comprise entre 5 et 50% en poids, une fonctionnalité moyenne comprise entre 2 et 3, une viscosité inférieure à 5.000 mPa.s à 70°C,
dans lequel ledit premier prépolymère polyol-alkyl-carbonate a une fonctionnalité moyenne comprise entre 1 et 2, une viscosité de 5 à 60 mPa.s à 25°C,
ii) au moins un composé chimique adapté pour modifier les caractéristiques spectrales de la lumière transmise,
c) la réticulation desdites première et deuxième couches dans le moule de manière à former un élément optique monolithique solide constitué de matière plastique thermodurcissable comprenant au moins une couche fonctionnalisée incorporant ledit au moins un composé chimique adapté pour modifier les caractéristiques spectrales de la lumière transmise.

2. Procédé de fabrication d'un élément optique constitué de matière plastique thermodurcissable et comprenant au moins une couche fonctionnalisée incorporant au moins un composé chimique adapté pour modifier les caractéristiques spectrales d'une lumière transmise, comprenant les étapes suivantes :
d) la disposition dans un moule d'une première couche autoporteuse constituée de matière plastique thermodurcissable partiellement réticulée comprenant un polymère polyuréthane ou carbonate d'alkyle-polyol partiellement réticulé comprenant des groupes fonctionnels réactifs sélectionnés à partir de -NCO ou -CH=CH₂ et au moins un composé chimique adapté pour modifier les caractéristiques spectrales de la lumière transmise de la couche autoporteuse ;
e) la formation sur au moins une surface de ladite couche autoporteuse d'une deuxième couche comprenant :
i) une matière polymérisable en phase liquide comprenant :
- un premier prépolymère polyisocyanate ou polyol-alkyl-carbonate et/ou un premier monomère isocyanate ou alkyl-carbonate comprenant des groupes fonctionnels réactifs capables de réagir du point de vue chimique avec les groupes fonctionnels réactifs de la couche autoporteuse constituée de matière plastique thermodurcissable partiellement réticulée,
- un composant réactif comprenant des groupes fonctionnels capables de réagir du point de vue chimique avec les groupes fonctionnels réactifs du premier prépolymère et/ou du premier monomère,
dans lequel lesdits groupes fonctionnels du premier prépolymère et/ou du premier monomère sont sélectionnés à partir de -NCO ou -CH=CH₂,
dans lequel ledit premier prépolymère polyisocyanate a une teneur en groupes fonctionnels réactifs isocyanate -NCO comprise entre 5 et 50% en poids, une fonctionnalité moyenne comprise entre 2 et 3, une viscosité inférieure à 5.000 mPa.s à 70°C,
dans lequel ledit premier prépolymère polyol-alkyl-carbonate a une fonctionnalité moyenne comprise entre 1 et 2, une viscosité de 5 à 60 mPa.s à 25°C,
f) la réticulation desdites première et deuxième couches dans le moule de manière à former un élément optique monolithique solide constitué de matière plastique thermodurcissable comprenant au moins une couche fonctionnalisée incorporant ledit au moins un composé chimique adapté pour modifier les caractéristiques spectrales de la lumière transmise.

3. Procédé selon la revendication 1, dans lequel ladite étape a) est exécutée au moyen des étapes suivantes :
a1) l'introduction dans une cavité de moule d'une couche d'une matière polymérisable en phase liquide comprenant :
- un premier prépolymère polyisocyanate ou polyol-alkyl-carbonate et/ou un premier monomère isocyanate ou alkyl-carbonate comprenant des groupes fonctionnels réactifs,
- un composant réactif comprenant des groupes fonctionnels capables de réagir du point de vue chimique avec les groupes fonctionnels réactifs du premier prépolymère et/ou du premier monomère,
dans lequel lesdits groupes fonctionnels du premier prépolymère et/ou du premier monomère sont sélectionnés à partir de -NCO ou -CH=CH₂,
dans lequel ledit premier prépolymère polyisocyanate a une teneur en groupes fonctionnels réactifs isocyanate -NCO comprise entre 5 et 50% en poids, une fonctionnalité moyenne comprise entre 2 et 3, une viscosité inférieure à 5.000 mPa.s à 70°C, et
dans lequel ledit premier prépolymère polyol-alkyl-carbonate a une fonctionnalité moyenne comprise entre 1 et 2, une viscosité de 5 à 60 mPa.s à 25°C,
a2) la réticulation partielle de la couche ainsi formée de manière à obtenir une couche autoporteuse constituée de matière plastique thermodurcissable partiellement réticulée comprenant des groupes fonctionnels réactifs.

4. Procédé selon la revendication 1, comprenant en outre l'étape d'association d'une couche polarisante à au moins une surface dudit élément optique monolithique constitué de matière plastique thermodurcissable.

5. Procédé selon la revendication 1, comprenant en outre l'étape d'incorporation d'une couche polarisante à l'intérieur de ladite première couche autoporteuse ou ladite deuxième couche.

6. Procédé selon la revendication 5, dans lequel ladite couche polarisante est un film polarisant, dans lequel ledit moule comprend :
- la couche autoporteuse obtenue au moyen de l'étape a),
- une paroi de moule travaillée et polie optiquement sur au moins un côté et définissant avec la couche autoporteuse au moins une cavité de moulage,
- un joint scellant latéralement ladite au moins une cavité de moulage et adapté pour supporter un film polarisant et maintenir celui-ci dans une condition suspendue, et
dans lequel l'étape b) est exécutée au moyen des étapes suivantes :
b1) l'association audit joint d'un film polarisant adapté pour être supporté et maintenu dans une condition suspendue par le joint précité de manière à définir à l'intérieur de ladite au moins une cavité de moulage une première portion creuse s'étendant entre la couche autoporteuse et le film polarisant et une deuxième portion creuse s'étendant entre le film polarisant et ledit côté travaillé et poli optiquement de ladite paroi de moule ;
b2) l'introduction dans lesdites première et deuxième portions creuses de ladite au moins une cavité de moulage d'une matière polymérisable en phase liquide comprenant :
- un premier prépolymère polyisocyanate ou polyol-alkyl-carbonate et/ou un premier monomère isocyanate ou alkyl-carbonate comprenant des groupes fonctionnels réactifs,
- un composant réactif comprenant des groupes fonctionnels capables de réagir du point de vue chimique avec les groupes fonctionnels réactifs du premier prépolymère et/ou du premier monomère,
dans lequel lesdits groupes fonctionnels du premier prépolymère et/ou du premier monomère sont sélectionnés à partir de -NCO ou -CH=CH₂,
dans lequel ledit premier prépolymère polyisocyanate a une teneur en groupes fonctionnels réactifs isocyanate -NCO comprise entre 5 et 50% en poids, une fonctionnalité moyenne comprise entre 2 et 3, une viscosité inférieure à 5.000 mPa.s à 70°C, et
dans lequel ledit premier prépolymère polyol-alkyl-carbonate a une fonctionnalité moyenne comprise entre 1 et 2, une viscosité de 5 à 60 mPa.s à 25°C.

7. Procédé selon la revendication 6, dans lequel ladite matière polymérisable en phase liquide comprend en outre au moins un composé chimique adapté pour modifier les caractéristiques spectrales de la lumière transmise.

8. Procédé selon la revendication 3, comprenant en outre l'intégration d'un film polarisant à l'intérieur de ladite première couche autoporteuse constituée de matière plastique thermodurcissable partiellement réticulée, dans lequel ladite étape a) est exécutée au moyen des étapes suivantes :
a1) la disposition d'un premier moule comprenant :
- une première paroi de moule,
- une deuxième paroi de moule définissant avec la première paroi de moule au moins une cavité de moulage,
- un joint scellant latéralement ladite au moins une cavité de moulage et adapté pour supporter un film polarisant et maintenir celui-ci dans une condition suspendue,
a2) l'association audit joint d'un film polarisant adapté pour être supporté et maintenu dans une condition suspendue par le joint précité de manière à définir à l'intérieur de ladite au moins une cavité de moulage une première portion creuse s'étendant entre la première paroi de moule et le film polarisant et une deuxième portion creuse s'étendant entre le film polarisant et la deuxième paroi de moule ;
a3) l'introduction dans lesdites première et deuxième portions creuses de ladite au moins une cavité de moulage d'une matière polymérisable en phase liquide selon l'étape a1) ;
a4) la réticulation partielle de la couche ainsi formée de manière à obtenir une couche autoporteuse constituée de matière plastique thermodurcissable partiellement réticulée comprenant des groupes fonctionnels réactifs et d'un film polarisant ; et
a5) l'insertion de la première couche autoporteuse ainsi obtenue dans un deuxième moule.

9. Procédé selon la revendication 8, dans lequel ladite matière polymérisable en phase liquide comprend en outre au moins un composé chimique adapté pour modifier les caractéristiques spectrales de la lumière transmise.

10. Procédé selon la revendication 8, comprenant en outre l'étape suivante :
a6) l'introduction dans au moins une portion de la couche autoporteuse constituée de matière plastique thermodurcissable partiellement réticulée ainsi obtenue d'au moins un composé chimique adapté pour modifier les caractéristiques spectrales de la lumière transmise.

11. Procédé selon la revendication 2, dans lequel ladite étape d) est exécutée au moyen des étapes suivantes :
d1) l'introduction dans une cavité de moule d'une couche d'une matière polymérisable en phase liquide comprenant :
- un premier prépolymère polyisocyanate ou polyol-alkyl-carbonate et/ou un premier monomère isocyanate ou alkyl-carbonate comprenant des groupes fonctionnels réactifs,
- un composant réactif comprenant des groupes fonctionnels capables de réagir du point de vue chimique avec les groupes fonctionnels réactifs du premier prépolymère et/ou du premier monomère,
dans lequel lesdits groupes fonctionnels du premier prépolymère et/ou du premier monomère sont sélectionnés à partir de -NCO ou -CH=CH₂,
dans lequel ledit premier prépolymère polyisocyanate a une teneur en groupes fonctionnels réactifs isocyanate -NCO comprise entre 5 et 50% en poids, une fonctionnalité moyenne comprise entre 2 et 3, une viscosité inférieure à 5.000 mPa.s à 70°C, et
dans lequel ledit premier prépolymère polyol-alkyl-carbonate a une fonctionnalité moyenne comprise entre 1 et 2, une viscosité de 5 à 60 mPa.s à 25°C ;
d2) la réticulation partielle de la couche ainsi formée de manière à obtenir une couche autoporteuse constituée de matière plastique thermodurcissable partiellement réticulée comprenant des groupes fonctionnels réactifs ;
d3) l'introduction dans au moins une portion de la couche autoporteuse constituée de matière plastique thermodurcissable partiellement réticulée ainsi obtenue dudit au moins un composé chimique adapté pour modifier les caractéristiques spectrales de la lumière transmise.

12. Procédé selon la revendication 2, dans lequel ladite étape d) est exécutée au moyen des étapes suivantes :
d4) l'introduction dans une cavité de moule d'une couche d'une matière polymérisable en phase liquide comprenant :
- un premier prépolymère polyisocyanate ou polyol-alkyl-carbonate et/ou un premier monomère isocyanate ou alkyl-carbonate comprenant des groupes fonctionnels réactifs,
- un composant réactif comprenant des groupes fonctionnels capables de réagir du point de vue chimique avec les groupes fonctionnels réactifs du premier prépolymère et/ou du premier monomère,
dans lequel lesdits groupes fonctionnels du premier prépolymère et/ou du premier monomère sont sélectionnés à partir de -NCO ou -CH=CH₂,
dans lequel ledit premier prépolymère polyisocyanate a une teneur en groupes fonctionnels réactifs isocyanate -NCO comprise entre 5 et 50% en poids, une fonctionnalité moyenne comprise entre 2 et 3, une viscosité inférieure à 5.000 mPa.s à 70°C, et
dans lequel ledit premier prépolymère polyol-alkyl-carbonate a une fonctionnalité moyenne comprise entre 1 et 2, une viscosité de 5 à 60 mPa.s à 25°C ;
et ledit au moins un composé chimique adapté pour modifier les caractéristiques spectrales de la lumière transmise,
d5) la réticulation partielle de la couche ainsi formée de manière à obtenir une couche autoporteuse constituée de matière plastique thermodurcissable partiellement réticulée comprenant des groupes fonctionnels réactifs et au moins un composé chimique adapté pour modifier les caractéristiques spectrales de la lumière transmise dans au moins une portion de celle-ci.

13. Procédé selon la revendication 2, comprenant en outre l'étape d'incorporation d'une couche polarisante à l'intérieur de ladite première couche autoporteuse ou ladite deuxième couche.

14. Procédé selon la revendication 2, comprenant en outre l'étape d'association d'une couche polarisante à au moins une surface dudit élément optique monolithique constitué de matière plastique thermodurcissable.

15. Procédé selon la revendication 2, comprenant en outre l'intégration d'un film polarisant à l'intérieur de ladite première couche autoporteuse constituée de matière plastique thermodurcissable partiellement réticulée, dans lequel ladite étape d) est exécutée au moyen des étapes suivantes :
d1) la disposition d'un premier moule comprenant :
- une première paroi de moule travaillée et polie optiquement sur au moins un côté,
- une deuxième paroi de moule travaillée et polie optiquement sur au moins un côté et définissant avec la première paroi de moule au moins une cavité de moulage,
- un joint scellant latéralement ladite au moins une cavité de moulage et adapté pour supporter un film polarisant et maintenir celui-ci dans une condition suspendue,
d2) l'association audit joint d'un film polarisant adapté pour être supporté et maintenu dans une condition suspendue par le joint précité de manière à définir à l'intérieur de ladite au moins une cavité de moulage une première portion creuse s'étendant entre la première paroi de moule et le film polarisant et une deuxième portion creuse s'étendant entre le film polarisant et la deuxième paroi de moule ;
d3) l'introduction dans lesdites première et deuxième portions creuses de ladite au moins une cavité de moulage d'une matière polymérisable en phase liquide comprenant :
- un premier prépolymère polyisocyanate ou polyol-alkyl-carbonate et/ou un premier monomère isocyanate ou alkyl-carbonate comprenant des groupes fonctionnels réactifs,
- un composant réactif comprenant des groupes fonctionnels capables de réagir du point de vue chimique avec les groupes fonctionnels réactifs du premier prépolymère et/ou du premier monomère,
dans lequel lesdits groupes fonctionnels du premier prépolymère et/ou du premier monomère sont sélectionnés à partir de -NCO ou -CH=CH₂,
dans lequel ledit premier prépolymère polyisocyanate a une teneur en groupes fonctionnels réactifs isocyanate -NCO comprise entre 5 et 50% en poids, une fonctionnalité moyenne comprise entre 2 et 3, une viscosité inférieure à 5.000 mPa.s à 70°C, et
dans lequel ledit premier prépolymère polyol-alkyl-carbonate a une fonctionnalité moyenne comprise entre 1 et 2, une viscosité de 5 à 60 mPa.s à 25°C ;
d4) la réticulation partielle de la couche ainsi formée de manière à obtenir une couche autoporteuse constituée de matière plastique thermodurcissable partiellement réticulée comprenant des groupes fonctionnels réactifs et d'un film polarisant ;
d5) l'introduction dans au moins une portion de la couche autoporteuse constituée de matière plastique thermodurcissable partiellement réticulée ainsi obtenue dudit au moins un composé chimique adapté pour modifier les caractéristiques spectrales de la lumière transmise ; et d6) l'insertion de la première couche autoporteuse ainsi obtenue dans un deuxième moule.

16. Procédé selon la revendication 2, comprenant en outre l'intégration d'un film polarisant à l'intérieur de ladite première couche autoporteuse constituée de matière plastique thermodurcissable partiellement réticulée, dans lequel ladite étape d) est exécutée au moyen des étapes suivantes :
d1) la disposition d'un premier moule comprenant :
- une première paroi de moule travaillée et polie optiquement sur au moins un côté,
- une deuxième paroi de moule travaillée et polie optiquement sur au moins un côté et définissant avec la première paroi de moule au moins une cavité de moulage,
- un joint scellant latéralement ladite au moins une cavité de moulage et adapté pour supporter un film polarisant et maintenir celui-ci dans une condition suspendue,
d2) l'association audit joint d'un film polarisant adapté pour être supporté et maintenu dans une condition suspendue par le joint précité de manière à définir à l'intérieur de ladite au moins une cavité de moulage une première portion creuse s'étendant entre la première paroi de moule et le film polarisant et une deuxième portion creuse s'étendant entre le film polarisant et la deuxième paroi de moule ;
d3) l'introduction dans lesdites première et deuxième portions creuses de ladite au moins une cavité de moulage d'une matière polymérisable en phase liquide comprenant :
- un premier prépolymère polyisocyanate ou polyol-alkyl-carbonate et/ou un premier monomère isocyanate ou alkyl-carbonate comprenant des groupes fonctionnels réactifs,
- un composant réactif comprenant des groupes fonctionnels capables de réagir du point de vue chimique avec les groupes fonctionnels réactifs du premier prépolymère et/ou du premier monomère,
dans lequel lesdits groupes fonctionnels du premier prépolymère et/ou du premier monomère sont sélectionnés à partir de -NCO ou -CH=CH₂,
dans lequel ledit premier prépolymère polyisocyanate a une teneur en groupes fonctionnels réactifs isocyanate -NCO comprise entre 5 et 50% en poids, une fonctionnalité moyenne comprise entre 2 et 3, une viscosité inférieure à 5.000 mPa.s à 70°C, et
dans lequel ledit premier prépolymère polyol-alkyl-carbonate a une fonctionnalité moyenne comprise entre 1 et 2, une viscosité de 5 à 60 mPa.s à 25°C ;
et
- au moins un composé chimique adapté pour modifier les caractéristiques spectrales de la lumière transmise ;
d4) la réticulation partielle de la couche ainsi formée de manière à obtenir une couche autoporteuse constituée de matière plastique thermodurcissable partiellement réticulée comprenant des groupes fonctionnels réactifs, d'au moins un composé chimique adapté pour modifier les caractéristiques spectrales de la lumière transmise dans au moins une portion de celle-ci et d'un film polarisant ;
d5) l'insertion de la première couche autoporteuse ainsi obtenue dans un deuxième moule.

17. Procédé selon la revendication 4 ou 14, dans lequel ladite couche polarisante est un revêtement polarisant.

18. Procédé selon la revendication 1 ou 2, comprenant en outre l'étape de refroidissement de la couche autoporteuse constituée de matière plastique thermodurcissable partiellement réticulée disposée dans le moule, ladite étape de refroidissement étant de préférence exécutée de manière à réduire la température de la couche à une valeur comprise entre 25°C et 80°C.

19. Procédé selon la revendication 18, comprenant en outre l'étape de chauffage de la couche autoporteuse constituée de matière plastique thermodurcissable partiellement réticulée et du moule à une température comprise entre 30°C et 110°C avant d'exécuter l'étape de formation de ladite deuxième couche sur au moins une surface de la première couche autoporteuse.

20. Procédé selon la revendication 1, dans lequel ladite étape b) est exécutée en coulant ladite matière polymérisable en phase liquide dans au moins une cavité définie dans le moule entre ladite au moins une surface de la couche autoporteuse et une surface intérieure du moule.

21. Procédé selon la revendication 1 ou 2, dans lequel ledit composant réactif comprend :
- au moins un deuxième prépolymère sélectionné de préférence à partir du groupe comprenant des prépolymères comprenant des groupes fonctionnels réactifs avec les groupes isocyanate -NCO et des prépolymères comprenant des groupes fonctionnels réactifs avec les groupes -CH=CH₂, et/ou
- au moins un deuxième monomère sélectionné de préférence à partir du groupe comprenant : des monomères comprenant des groupes fonctionnels réactifs avec les groupes isocyanate - NCO et des monomères comprenant des groupes fonctionnels réactifs avec les groupes -CH=CH₂, et/ou
- au moins un agent de réticulation sélectionné de préférence à partir du groupe comprenant : des agents de réticulation comprenant des groupes fonctionnels réactifs avec les groupes isocyanate -NCO et des agents de réticulation comprenant des groupes fonctionnels réactifs avec les groupes -CH=CH₂, et/ou
- au moins un catalyseur de polymérisation du premier prépolymère et/ou du premier monomère sélectionné de préférence à partir du groupe comprenant : des catalyseurs comprenant des groupes fonctionnels réactifs avec les groupes isocyanate -NCO et des catalyseurs comprenant des groupes fonctionnels réactifs avec les groupes -CH=CH₂,
en phase liquide ou solide.

22. Procédé selon la revendication 1, 2 ou 21, dans lequel ledit composant réactif comprend des groupes fonctionnels capables de réagir du point de vue chimique avec les groupes fonctionnels réactifs de la couche autoporteuse constituée de matière plastique thermodurcissable partiellement réticulée.

23. Procédé selon l'une quelconque des revendications 1 à 22, dans lequel ledit au moins un composé chimique adapté pour modifier les caractéristiques spectrales de la lumière transmise est sélectionné à partir de composés colorants adaptés pour filtrer la lumière visible, comprenant de préférence des groupes chromophores d'azobenzène, des groupes chromophores d'anthraquinone et leurs mélanges, de composés photochromes sélectionnés de préférence à partir du groupe comprenant des spiropyranes, spirooxazines, fulgides et leurs mélanges, et des mélanges de ceux-ci.

24. Elément optique polarisant ou non polarisant constitué de matière plastique thermodurcissable obtenue par le procédé selon l'une quelconque des revendications 1 à 23.

25. Dispositif de protection des yeux comprenant un élément optique selon la revendication 24.
